# EUROPÄISCHE PATENTSCHRIFT

(11) **EP 3 929 458 B1**
(45) Veröffentlichungstag und Bekanntmachung des Hinweises auf die Patenterteilung: **09.10.2024**
(21) Anmeldenummer: 21177994.7
(22) Anmeldetag: 07.06.2021
(51) Int. Cl.: F16F 1/12, B60G 15/06

(54) **SELBSTSICHERNDER VORSPANNRING FÜR FEDERBEINE**
SELF-SECURING BIASING RING FOR SPRING STRUTS
ANNEAU DE PRÉCONTRAINTE AUTOBLOQUANT POUR JAMBES DE SUSPENSION

(30) Priorität: 12.06.2020 AT 505122020
(43) Veröffentlichungstag der Anmeldung: 29.12.2021
(73) Patentinhaber: KTM AG, 5230 Mattighofen (AT)
(72) Erfinder: PRIEWASSER, Markus, 5231 Schalchen (AT)
(74) Vertreter: Torggler & Hofmann Patentanwälte - Innsbruck

(56) Entgegenhaltungen:
- EP-A1- 2 231 427
- EP-B1- 2 231 427
- DE-U1- 202005 013 316
- US-B1- 8 702 075

## Beschreibung

Die Erfindung betrifft ein Anschlagelement gemäß den Merkmalen des Oberbegriffs des Anspruchs 1 sowie ein Federbein für ein Fahrzeug, insbesondere für ein Motorrad, umfassend
- einen Zylinder mit einem im Zylinder bewegbaren Kolben,
- eine zumindest teilweise um den Zylinder angeordnete Schraubenfeder,
- ein Anschlagelement für die Lagerung der Schraubenfeder, wobei die Position des Anschlagelements entlang der Längsrichtung des Zylinders zumindest in Bezug auf eine Richtung einstellbar fixierbar ist, und wobei der Zylinder zumindest bereichsweise mit einem Außengewinde versehen ist und das Anschlagelement zumindest bereichsweise mit einem zum Außengewinde korrespondierenden Innengewinde versehen ist.

Weiters betrifft die Erfindung ein Fahrzeug mit einem derartigen Federbein und ein Anschlagelement für die Lagerung einer zumindest teilweise um einen Zylinder eines wie oben beschriebenen Federbeins angeordneten Schraubenfeder.

Die WO 2009/077099 A1 offenbart ein Federbein mit einem Stelltrieb für eine Niveauverstellung. Zum Sichern gegen fehlerhafte Ansteuerung des Stelltriebs ist eine Drehfeder vorhanden, welche bei der fehlerhaften Ansteuerung eine Drehblockierung erzeugen soll.

Die DE 202005013316 U1 und die US 8702075 B1 offenbaren Federbeine, wobei die Höhe eines Rahmens eines Fahrzeugs einstellbar ist.

Bei einem Federbein handelt es sich um eine Kombination eines hydraulischen Stoßdämpfers mit einem Zylinder und einem im Zylinder bewegbaren Kolben und einer Schraubenfeder, wobei der Stoßdämpfer im Zentrum der Schraubenfeder angeordnet ist. Zur Einstellung der Federwirkung des Federbeins wird die Schraubenfeder vorgespannt. Dafür wird häufig ein mit einem Innengewinde versehenes Anschlagelement für die Feder verwendet, welches auf den Zylinder des Stoßdämpfers aufgeschraubt wird, der zu diesem Zweck ein Außengewinde aufweist, wobei das Innengewinde des Anschlagelementes mit dem Außengewinde des Zylinders korrespondiert. Zur Einstellung der Vorspannung der Schraubenfeder wird die Position des Anschlagelements entlang der Längsrichtung des Zylinders verändert, indem dieses entweder in die eine oder in die andere Drehrichtung gedreht und somit über die Verbindung zwischen Außen- und Innengewinde entlang der Längsrichtung des Zylinders bewegt wird. Zur Fixierung der Position des Anschlagelements wird häufig ein Klemmring verwendet, der um das Anschlagelement gelegt wird. Mittels einer Schraubverbindung wird der Klemmring dann auf dem Anschlagelement befestigt, wodurch das häufig als geschlitzte Kunststoffmutter ausgebildete Anschlagelement auf dem Zylinder festgeklemmt wird. Es handelt sich bei diesem Klemmring um eine Art Klemmschelle.

Diese Lösung hat einerseits den Nachteil einer komplizierten Handhabung, da der Klemmring nachträglich aufgebracht und mit einem gesonderten Werkzeug befestigt werden muss. Vor allem aber besteht die Gefahr, dass der Klemmring zu fest angezogen wird, wodurch der Zylinder des Stoßdämpfers im Bereich des Klemmrings leicht eingedellt wird. Es entsteht dadurch ein Flaschenhals, sodass der im Zylinder bewegte Kolben an der Innenwand des Zylinders stark reiben und letzten Endes feststecken kann, wodurch der Stoßdämpfer zerstört wird.

Aufgabe der vorliegenden Erfindung ist es, die obigen Nachteile zu vermeiden und ein Anschlagelement sowie ein Federbein zur Verfügung zu stellen, bei dem die Position des Anschlagelements zumindest in Bezug auf eine Richtung entlang der Längsrichtung des Zylinders des Stoßdämpfers in einfacher Weise fixierbar ist, ohne Gefahr zu laufen, den Stoßdämpfer bei der Fixierung des Anschlagelements zu beschädigen.

Diese Aufgabe wird durch ein Anschlagelement mit den Merkmalen des Anspruchs 1 sowie durch ein Federelement mit den Merkmalen des Anspruchs 3 gelöst. Weitere vorteilhafte Ausführungen der Erfindung sind in den abhängigen Ansprüchen definiert.

Das erfindungsgemäße Federbein wird in einem Fahrzeug, insbesondere einem Motorrad, eingebaut und kann zur Federung des Vorderrads oder der Vorderräder aber auch zur Federung des Hinterrads oder der Hinterräder verwendet werden.

Das Federbein umfasst einen Stoßdämpfer mit einem im Zylinder bewegbaren Kolben sowie eine zumindest teilweise um den Zylinder angeordnete Schraubenfeder. Für die Lagerung eines Endes der Schraubenfeder ist ein auf dem Zylinder aufschraubbares Anschlagelement vorgesehen. Zu diesem Zweck ist der Zylinder zumindest bereichsweise mit einem Außengewinde versehen und das Anschlagelement weist zumindest bereichsweise ein zum Außengewinde korrespondierendes Innengewinde auf. Das Anschlagelement stellt somit einen Federspannring dar. Das andere Ende der Schraubenfeder ist an einem zweiten Anschlagelement gelagert.

Wird das Anschlagelement so gedreht, dass sich der Abstand zum zweiten Anschlagelement und damit auch die Länge der Schraubenfeder vergrößert, wird diese entspannt, das heißt die Vorspannung wird geringer. Wird der Abstand zum zweiten Anschlagelement und damit auch die Länge der Schraubenfeder jedoch durch Drehung des Anschlagelements in die andere Richtung verkleinert, wird die Vorspannung erhöht. Insbesondere bei der Anwendung zur Federung des Hinterrads von Motorrädern wird die Vorspannung zum Reifenwechseln sehr weit reduziert.

Zur Fixierung der Position des Anschlagelements in Bezug auf eine Richtung entlang der Längsrichtung des Zylinders - das heißt das Anschlagelement kann nach der Fixierung in diese Richtung nicht mehr weiter bewegt werden - ist ein Gewindeeinsatz vorgesehen, der im Anschlagelement angeordnet ist. Der Gewindeeinsatz weist einen Haltebereich und einen Betätigungsbereich auf. Der Bereich zwischen dem Haltebereich und dem Betätigungsbereich ist in den Gewindegängen des Außengewindes des Zylinders anordenbar.

Im Anschlagelement ist ein Haltemittel vorgesehen, in dem der Haltebereich des Gewindeeinsatzes vorzugsweise lösbar befestigbar ist. Indem der Betätigungsbereich des Gewindeeinsatzes bewegbar im Anschlagelement gelagert ist, wobei durch eine Bewegung des Betätigungsbereiches der Durchmesser des Gewindeeinsatzes veränderbar ist, kann in einer ersten Stellung des Betätigungsbereichs, in der der Durchmesser des Gewindeeinsatzes vergrößert ist, das Anschlagelement gedreht und somit entlang der Längsrichtung des Zylinders bewegt werden, während in einer zweiten Stellung des Betätigungsbereichs, in der der Durchmesser des Gewindeeinsatzes geringer ausfällt und der Gewindeeinsatz eng in den Gewindegängen des Außengewindes des Zylinders anliegt, wird in Folge der dadurch entstehenden Reibkraft eine Drehung des Anschlagelementes verunmöglicht und somit die Position des Anschlagelements fixiert.

Gemäß der Erfindung weist das Anschlagelement ein, vorzugsweise im Wesentlichen parallel zu den Gewindegängen des Innengewindes angeordnetes, Langloch auf, in dem der Betätigungsbereich des Gewindeeinsatzes bewegbar gelagert ist. Durch die Ausdehnung des Langlochs wird die Bewegung des Betätigungsbereichs durch die zwei Enden des Langlochs begrenzt.

Bevorzugt ist dabei vorgesehen, dass der Gewindeeinsatz federnd ausgebildet ist. Die Federwirkung bezieht sich dabei auf die Bewegung des Betätigungsbereichs und somit die Veränderung des Durchmessers des Gewindeeinsatzes. Dabei wird der Betätigungsbereich entgegen der Federkraft zur Vergrößerung des Durchmessers des Gewindeeinsatzes bewegt, während gleichzeitig der Haltebereich des Gewindeeinsatzes vom Haltemittel gehalten wird. Dabei kann eine Rastposition für den Betätigungsbereich vorgesehen sein, sodass der Betätigungsbereich daran gehindert wird, sich von selbst aufgrund der Federkraft in die Verriegelungsposition zurück zu bewegen, also in jene Position, in der der Gewindeeinsatz eng am Außengewinde des Zylinders anliegt. Dadurch muss der Bediener das Anschlagelement nicht festhalten und hat beide Hände für Arbeiten am Fahrzeug zur Verfügung.

Bewegt sich der Betätigungsbereichs anschließend durch die Federkraft wieder in Richtung der Verriegelungsposition zurück, etwa weil der Betätigungsbereich aus der Rastposition gelöst wird, umschließt der Gewindeeinsatz aufgrund der wirkenden Federkraft wieder eng den Zylinder in den Gewindegängen des Außenbereiches und sperrt dadurch eine weitere Drehung des Anschlagelements. Da sich die Fixierung des Anschlagelements durch die Federkraft des Gewindeeinsatzes ergibt, ist ein zu starkes Anziehen des Anschlagelements und eine dadurch resultierende Beschädigung des Kolbens nicht möglich.

Bevorzugt ist vorgesehen, dass der Haltebereich und/oder der Betätigungsbereich als radial nach außen weisender Zapfen ausgebildet ist, wodurch einerseits eine einfache Befestigung des Haltebereichs und andererseits eine leichte Bewegung des Betätigungsbereichs ermöglich wird, zumal die Innenseite des Anschlagelements im Wesentlichen rund ausgebildet ist.

Bevorzugt ist der Gewindeeinsatz als Schraubenfeder ausgebildet, wobei in diesem Fall der Haltebereich und/oder der Betätigungsbereich bevorzugt als radial nach außen weisender Zapfen ausgebildet ist, indem eines oder beide Federenden der Feder nach außen gebogen sind. Dabei kann es vorgesehen sein, dass der Betätigungsbereich weiter nach außen ragt als der Haltebereich. Die Federwirkung der Schraubenfeder beschränkt sich dabei nicht auf Kompression und Ausdehnung der Feder in Längsrichtung sondern erstreckt sich auch auf eine Drehbewegung der Federenden. Wird das als Betätigungsbereich ausgebildete Federende gedreht, das heißt tangential bewegt, während das als Haltebereich ausgebildete andere Federende festgehalten wird, wird der Durchmesser der Feder entgegen der Federkraft vergrößert. Lässt man den Betätigungsbereich los, wird dieser durch die Federkraft zurück gedreht, wobei sich der Durchmesser der Feder verringert.

Im Falle eines Haltebereichs, der als nach außen weisender Zapfen ausgebildet ist, kann das Haltemittel als Bohrung ausgebildet sein. Durch eine Anordnung des Haltebereichs in dieser Bohrung wird der Haltebereich dort befestigt. Dadurch ergibt sich ein Gegenlager des Gewindeeinsatzes für die Bewegung des Betätigungsbereichs, was insbesondere bei einem federnden Gewindeeinsatz von Vorteil ist.

In einer Ausführungsform der Erfindung ist der federnd ausgebildete Gewindeeinsatz derart im Anschlagelement angeordnet, dass der Betätigungsbereich aufgrund der Federwirkung des Gewindeeinsatzes gegen ein erstes Ende des Langlochs drückt. Das erste Ende des Langlochs begrenzt somit die sich aufgrund der Federwirkung ergebende Bewegung des Betätigungsbereichs. Es ist aber auch möglich, dass die sich aufgrund der Federwirkung ergebende Bewegung des Betätigungsbereichs zum Stillstand kommt, bevor der Betätigungsbereich gegen das erste Ende des Langlochs drückt, da der Gewindeeinsatz bereits vor dieser Position des Betätigungsbereichs eng am Außengewinde anliegt. Kommt die sich aufgrund der Federwirkung ergebende Bewegung des Betätigungsbereichs zum Stillstand, liegt ein unbelasteter Zustand des Gewindeeinsatzes, frei von einer externen Kraftbeaufschlagung, vor. Bei einer Bewegung des Betätigungsbereichs in Richtung des anderen Endes des Langlochs entgegen der Federwirkung wird der Durchmesser des Gewindeeinsatzes vergrößert.

Aufgrund der Federwirkung legt sich der vorzugsweise als Schraubenfeder ausgebildete Gewindeeinsatz automatisch in die Gewindegänge des Außengewindes, wenn der Betätigungsbereich nicht entgegen der Federwirkung bewegt oder in einer solchen Position etwa durch ein Entriegelungselement gehalten wird. Die bei einem Eingriff des Gewindeeinsatzes in die Gewindegänge entstehende Reibkraft verhindert eine Drehung des mit dem Gewindeeinsatz über den Haltebereich und das Haltemittel verbundenen Anschlagelements. Durch eine Bewegung des Betätigungsbereichs in Richtung des anderen Endes des Langlochs wird der Durchmesser des Gewindeeinsatzes vergrößert, sodass dieser nicht mehr mit den Gewindegängen in Eingriff ist und keine Reibkraft oder nur mehr eine reduzierte Reibkraft auf das Außengewinde ausübt. Eine Drehung des Anschlagelements und somit eine Verstellung der Position entlang der Längsrichtung des Zylinders ist somit möglich.

Ist das Langloch im Wesentlichen parallel zu den Gewindegängen des Innengewindes ausgerichtet, wird in der Verriegelungsposition des Betätigungsbereichs, wenn dieser an das erste Ende des Langlochs drückt oder die sich aufgrund der Federwirkung ergebende Bewegung des Betätigungsbereichs aufgrund des Anliegens des Gewindeeinsatzes am Außengewinde zum Stillstand gekommen ist (der Betätigungsbereich kann dabei im Bereich des ersten Endes des Langlochs angeordnet sein), die Drehung des Anschlagelementes in einer Richtung aufgrund der auf das Außengewinde ausgeübten Reibungskraft verunmöglicht. Der Betätigungsbereich befindet sich in der Verriegelungsposition. Eine Drehung des Anschlagelementes in jener Drehrichtung, die vom anderen Ende des Langlochs zum ersten Ende des Langlochs weist, ist allerdings möglich. In diesem Fall wird bei einer Drehung des Anschlagelements der Haltebereich derart mitbewegt, dass sich der Durchmesser des Gewindeeinsatzes in diesem Bereich etwas vergrößert (ein gewisses Spiel ist hier stets vorhanden). Dies pflanzt sich aufgrund der Reibung zwischen dem Gewindeeinsatz und dem Außengewinde fort, sodass der Durchmesser des Gewindeeinsatzes insgesamt vergrößert und die auf das Außengewinde ausgeübte Reibkraft reduziert wird. Der restliche Gewindeeinsatz einschließlich des Betätigungsbereichs wird mit dem Haltebereich mitgeschleppt und eine Drehung des Anschlagelements in diese Richtung ist insgesamt möglich. Eine Drehung des Anschlagelements in die andere Drehrichtung wird jedoch verunmöglicht, da in diesem Fall der Haltebereich in einer Richtung bewegt würde, sodass sich der Durchmesser des Gewindeeinsatzes noch weiter verkleinern würde, wodurch eine noch größere Reibkraft auf das Außengewinde ausgeübt würde. Da die Sperre nur eine Drehrichtung betrifft, wird die Bewegung des Anschlagelements nur in Bezug auf eine Richtung entlang der Längsrichtung des Zylinders fixiert.

Wird der Betätigungsbereich von der Verriegelungsposition, also vom ersten Ende des Langlochs, wegbewegt, hat dies eine Vergrößerung des Durchmessers des Gewindeeinsatzes und damit einhergehend eine Reduktion der auf das Außengewinde ausgeübten Reibkraft zur Folge, sodass in diesem Zustand das Anschlagelement auch in jener Drehrichtung verdreht werden kann, die vom ersten Ende des Langlochs zum anderen Ende des Langlochs weist.

Die Bewegung des Betätigungsbereichs kann beispielsweise erfolgen, indem ein auf dem Anschlagelement drehbar gelagertes Entriegelungselement vorgesehen ist, welches auf seiner Innenseite eine Nut aufweist, in die der Betätigungsbereich des Gewindeeinsatzes eingreift. Das Entriegelungselement kann dabei unabhängig vom Anschlagelement gedreht werden. Zu diesem Zweck kann beispielsweise auf der Innenseite des Anschlagelements eine Nut angeordnet sein, die in Längsrichtung beschränkt ist. Sobald der Betätigungsbereich am Ende der Längsnut anschlägt, wird der Betätigungsbereich gemeinsam mit dem Entriegelungselement gedreht und somit tangential bewegt.

In einer bevorzugten Ausführungsform der Erfindung ist im Anschlagelement ein zweiter Gewindeeinsatz angeordnet. Der zweite Gewindeeinsatz weist einen Haltebereich und einen Betätigungsbereich auf, wobei der Bereich zwischen dem Haltebereich des zweiten Gewindeeinsatzes und dem Betätigungsbereich des zweiten Gewindeeinsatzes wie der oben beschriebene Gewindeeinsatz in den Gewindegängen des Außengewindes des Zylinders anordenbar ist. Im Anschlagelement ist ein zweites Haltemittel für den Haltebereich des zweiten Gewindeeinsatzes vorgesehen, wobei der Betätigungsbereich des zweiten Gewindeeinsatzes bewegbar im Anschlagelement gelagert ist, wobei durch eine Bewegung des Betätigungsbereichs des zweiten Gewindeeinsatzes der Durchmesser des zweiten Gewindeeinsatzes veränderbar ist.

Vorzugsweise ist der zweite Gewindeeinsatz identisch zum oben beschriebenen Gewindeeinsatz ausgebildet. Insbesondere ist bevorzugt vorgesehen, dass der zweite Gewindeeinsatz federnd ausgebildet ist. Die Federwirkung bezieht sich dabei auf die Bewegung des Betätigungsbereichs des zweiten Gewindeeinsatzes und somit die Veränderung des Durchmessers des zweiten Gewindeeinsatzes. Dabei wird der Betätigungsbereich des zweiten Gewindeeinsatzes entgegen der Federkraft zur Vergrößerung des Durchmessers des zweiten Gewindeeinsatzes bewegt, während gleichzeitig der Haltebereich des zweiten Gewindeeinsatzes vom Haltemittel des zweiten Gewindeeinsatzes gehalten wird. Dabei kann eine Rastposition für den Betätigungsbereich des zweiten Gewindeeinsatzes vorgesehen sein, sodass der Betätigungsbereich des zweiten Gewindeeinsatzes daran gehindert wird, sich von selbst aufgrund der Federkraft in die Verriegelungsposition zurück zu bewegen, also in jene Position, in der der Gewindeeinsatz eng am Außengewinde des Zylinders anliegt.

Bewegt sich der Betätigungsbereichs des zweiten Gewindeeinsatzes anschließend durch die Federkraft wieder zurück, etwa weil der Betätigungsbereich aus der Rastposition gelöst wird, umschließt auch der zweite Gewindeeinsatz aufgrund der wirkenden Federkraft wieder eng den Zylinder in den Gewindegängen des Außenbereiches und sperrt dadurch eine weitere Drehung des Anschlagelements. Da sich die Fixierung des Anschlagelements durch die Federkraft des zweiten Gewindeeinsatzes ergibt, ist ein zu starkes Anziehen des Anschlagelements und eine dadurch resultierende Beschädigung des Kolbens nicht möglich.

Sowohl für den Betätigungsbereich des Gewindeeinsatzes als auch für den Betätigungsbereich des zweiten Gewindeeinsatzes können zusätzlich oder alternativ zur Rastposition, in der der Betätigungsbereich daran gehindert wird, sich von selbst aufgrund der Federkraft in die Verriegelungsposition zurückzubewegen, eine Rastposition für die Verriegelungsposition vorgesehen sein. Diese Rastposition verhindert zusätzlich zur wirkenden Federkraft eine unfreiwillige Bewegung des Betätigungsbereiches weg von der Verriegelungsposition.

Bevorzugt ist vorgesehen, die Rastposition für den Betätigungsbereich des Gewindeeinsatzes und/oder für den Betätigungsbereich des zweiten Gewindeeinsatzes sowohl für die Verriegelungsposition als auch für die gegenüberliegende Position durch speziell geformte Ausnehmungen und/oder druch Rastelemente im Entriegelungselement zu realisieren. Dabei kann der Betätigungsbereich des Gewindeeinsatzes und/oder der Betätigungsbereich des zweiten Gewindeeinsatzes beispielsweise in speziell ausgeformte Ausnehmungen auf der Innenseite des Gewindeeinsatzes eingreifen, wobei zu diesem Zweck zusätzlich Rastelemente vorgesehen sein können.

Zusätzlich oder alternativ zu der Rastposition oder zu den Rastpositionen für den Betätigungsbereich des Gewindeeinsatzes und/oder für den Betätigungsbereich des zweiten Gewindeeinsatzes können ein oder mehrere Rastpositionen für den Haltebereich des Gewindeeinsatzes und/oder den Haltebereich des zweiten Gewindeeinsatzes vorgesehen sein. Dies kann beispielsweise dadurch realisiert werden, dass bei einer Bewegung des Betätigungsbereichs mittels des Entriegelungselements der Haltebereich des Gewindeeinsatzes und/oder der Haltebereich des zweiten Gewindeeinsatzes in speziell geformte Ausnehmungen auf der Innenseite des Entriegelungselementes eingreifen, die eine Bewegung des Entriegelungselements und somit auch des Betätigungsbereichs des Gewindeeinsatzes und/oder des Betätigungsbereichs des zweiten Gewindeeinsatzes verhindern und somit den Betätigungsbereich daran hindern, sich von selbst aufgrund der Federkraft in die Verriegelungsposition zurückzubewegen. Zu diesem Zweck können auch, vorzugsweise im Entriegelungselement angeordnete, Rastelemente vorgesehen sein.

Wie im Falle des oben beschriebenen Gewindeeinsatzes ist auch in Bezug auf den zweiten Gewindeeinsatz bevorzugt vorgesehen, dass der Haltebereich des zweiten Gewindeeinsatzes und/oder der Betätigungsbereich des zweiten Gewindeeinsatzes als radial nach außen weisender Zapfen ausgebildet ist, wodurch einerseits eine einfache Befestigung des Haltebereichs des zweiten Gewindeeinsatzes und andererseits eine leichte Bewegung des Betätigungsbereichs des zweiten Gewindeeinsatzes ermöglich wird.

Bevorzugt ist auch der zweite Gewindeeinsatz als Schraubenfeder ausgebildet, wobei in diesem Fall der Haltebereich des zweiten Gewindeeinsatzes und/oder der Betätigungsbereich des zweiten Gewindeeinsatzes bevorzugt als radial nach außen weisender Zapfen ausgebildet ist, indem eines oder beide Federenden der Feder nach außen gebogen sind. Dabei kann es vorgesehen sein, dass der Betätigungsbereich des zweiten Gewindeeinsatzes weiter nach außen ragt als der Haltebereich des zweiten Gewindeeinsatzes. Die Federwirkung der Schraubenfeder beschränkt sich dabei nicht auf Kompression und Ausdehnung der Feder in Längsrichtung sondern erstreckt sich auch auf eine Drehbewegung der Federenden. Wird das als Betätigungsbereich des zweiten Gewindeeinsatzes ausgebildete Federende gedreht, das heißt tangential bewegt, während das als Haltebereich des zweiten Gewindeeinsatzes ausgebildete andere Federende festgehalten wird, wird der Durchmesser der Feder entgegen der Federkraft vergrößert. Lässt man den Betätigungsbereich des zweiten Gewindeeinsatzes los, wird dieser durch die Federkraft zurück gedreht, wobei sich der Durchmesser der Feder verringert.

Bevorzugt ist im Anschlagelement ein zweites, vorzugsweise im Wesentlichen parallel zu den Gewindegängen des Innengewindes angeordnetes, Langloch vorgesehen sein, in dem der Betätigungsbereich des zweiten Gewindeeinsatzes bewegbar gelagert ist. Das zweite Haltemittel kann als Bohrung ausgebildet sein, in welcher der Haltebereich des zweiten Gewindeeinsatzes befestigbar ist. Es kann auch vorgesehen sein, dass das erste Haltemittel und das zweite Haltemittel übereinstimmen, das heißt ein Haltemittel dient zur Befestigung sowohl des Haltebereichs des Gewindeeinsatzes als auch des Haltebereichs des zweiten Gewindeeinsatzes.

Es kann auch vorgesehen sein, dass der Gewindeeinsatz und der zweite Gewindeeinsatz als ein einziges Bauteil ausgebildet sind, etwa indem der erste und der zweite Haltebereich ineinander übergehen oder der erste und der zweite Haltebereich übereinstimmen. Der Gewindeeinsatz und der zweite Gewindeeinsatz weisen einen gemeinsamen Haltebereich auf, der von einem gemeinsamen Haltemittel gehalten wird. Dazu kann beispielsweise ein nach außen ragender Zapfen gleichzeitig als erster und der zweiter Haltebereich dienen, der in einer Ausnehmung, die als gemeinsames Haltemittel dient, angeordnet wird.

In einer Ausführungsform der Erfindung ist der federnd ausgebildete zweite Gewindeeinsatz derart im Anschlagelement angeordnet, dass der Betätigungsbereich des zweiten Gewindeeinsatzes aufgrund der Federwirkung des zweiten Gewindeeinsatzes gegen ein erstes Ende des zweiten Langlochs drückt. Das erste Ende des zweiten Langlochs begrenzt somit die sich aufgrund der Federwirkung ergebende Bewegung des Betätigungsbereichs des zweiten Gewindeeinsatzes. Es ist aber auch möglich, dass die sich aufgrund der Federwirkung des zweiten Gewindeeinsatzes ergebende Bewegung des Betätigungsbereichs des zweiten Gewindeeinsatzes zum Stillstand kommt, bevor der Betätigungsbereich des zweiten Gewindeeinsatzes gegen das erste Ende des zweiten Langlochs drückt, da der zweite Gewindeeinsatz bereits vor dieser Position des Betätigungsbereichs eng am Außengewinde anliegt. Kommt die sich aufgrund der Federwirkung ergebende Bewegung des Betätigungsbereichs des zweiten Gewindeeinsatzes zum Stillstand, liegt ein unbelasteter Zustand des zweiten Gewindeeinsatzes, frei von einer externen Kraftbeaufschlagung, vor. Bei einer Bewegung des Betätigungsbereichs des zweiten Gewindeeinsatzes in Richtung des anderen Endes des zweiten Langlochs entgegen der Federwirkung wird der Durchmesser des zweiten Gewindeeinsatzes vergrößert.

Aufgrund der Federwirkung legt sich der vorzugsweise als Schraubenfeder ausgebildete zweite Gewindeeinsatz automatisch in die Gewindegänge des Außengewindes, wenn der Betätigungsbereich des zweiten Gewindeeinsatzes nicht entgegen der Federwirkung bewegt oder in einer solchen Position etwa durch ein Entriegelungselement gehalten wird. Die bei einem Eingriff des zweiten Gewindeeinsatzes in die Gewindegänge entstehende Reibkraft verhindert eine Drehung des mit dem zweiten Gewindeeinsatz über den Haltebereich des zweiten Gewindeeinsatzes und das zweite Haltemittel verbundenen Anschlagelements. Durch eine Bewegung des Betätigungsbereichs des zweiten Gewindeeinsatzes in Richtung des anderen Endes des zweiten Langlochs wird der Durchmesser des zweiten Gewindeeinsatzes vergrößert, sodass dieser nicht mehr mit den Gewindegängen in Eingriff ist und keine Reibkraft oder nur mehr eine reduzierte Reibkraft auf das Außengewinde ausübt. Eine Drehung des Anschlagelements und somit eine Verstellung der Position entlang der Längsrichtung des Zylinders ist somit möglich.

Ist das zweite Langloch im Wesentlichen parallel zu den Gewindegängen des Innengewindes ausgerichtet, wird in der ersten Stellung des Betätigungsbereichs des zweiten Gewindeeinsatzes, wenn dieser an das erste Ende des zweiten Langlochs drückt, oder die sich aufgrund der Federwirkung ergebende Bewegung des Betätigungsbereichs des zweiten Gewindeeinsatzes aufgrund des Anliegens des zweiten Gewindeeinsatzes am Außengewinde zum Stillstand gekommen ist (der Betätigungsbereich des zweiten Gewindeeinsatzes kann dabei im Bereich des ersten Endes des zweiten Langlochs angeordnet sein), die Drehung des Anschlagelementes in einer Richtung aufgrund der auf das Außengewinde ausgeübten Reibkraft verunmöglicht. Der Betätigungsbereich des zweiten Gewindeeinsatzes befindet sich in der Verriegelungsposition. Eine Drehung des Anschlagelementes in jener Drehrichtung, die vom anderen Ende des zweiten Langlochs zum ersten Ende des zweiten Langlochs weist, ist allerdings möglich. In diesem Fall wird bei einer Drehung des Anschlagelements der zweite Haltebereich derart mitbewegt, dass sich der Durchmesser des zweiten Gewindeeinsatzes in diesem Bereich etwas vergrößert (ein gewisses Spiel ist hier stets vorhanden). Dies pflanzt sich aufgrund der Reibung zwischen dem Gewindeeinsatz und dem Außengewinde fort, sodass der Durchmesser des Gewindeeinsatzes insgesamt vergrößert und die auf das Außengewinde ausgeübte Reibkraft reduziert wird. Der restliche zweite Gewindeeinsatz einschließlich des Betätigungsbereichs des zweiten Gewindeeinsatzes wird mit dem zweiten Haltebereich mitgeschleppt und eine Drehung des Anschlagelements ist insgesamt möglich. Eine Drehung des Anschlagelements in die andere Drehrichtung wird jedoch verunmöglicht, da in diesem Fall der zweite Haltebereich in einer Richtung bewegt würde, sodass sich der Durchmesser des zweiten Gewindeeinsatzes noch weiter verkleinern würde, wodurch eine noch größere Reibkraft auf das Außengewinde ausgeübt würde. Da die Sperre nur eine Drehrichtung betrifft, wird die Bewegung des Anschlagelements nur in Bezug auf eine Richtung entlang der Längsrichtung des Zylinders fixiert.

Wird der Betätigungsbereich des zweiten Gewindeeinsatzes von der Verriegelungsposition, also vom ersten Ende des zweiten Langlochs wegbewegt, hat dies eine Vergrößerung des Durchmessers des zweiten Gewindeeinsatzes und damit einhergehend eine Reduktion der auf das Außengewinde ausgeübten Reibkraft zur Folge, sodass in diesem Zustand das Anschlagelement auch in jener Drehrichtung verdreht werden kann, die vom ersten Ende des zweiten Langlochs zum anderen Ende des zweiten Langlochs weist

Bevorzugt ist vorgesehen, dass die Richtung, in die der Betätigungsbereich des zweiten Gewindeeinsatzes zur Vergrößerung des Durchmessers des zweiten Gewindeeinsatzes bewegbar ist, unterschiedlich ist zur Richtung, in die der Betätigungsbereich des Gewindeeinsatzes zur Vergrößerung des Durchmessers des Gewindeeinsatzes bewegbar ist. Bei einer derartigen Anordnung des Gewindeeinsatzes und des zweiten Gewindeeinsatzes wirken diese gegengleich, sodass eine Drehung des Anschlagelementes in beide Richtungen verunmöglicht wird, wenn der erste Betätigungsbereich und der Betätigungsbereich des zweiten Gewindeeinsatzes beide in der Verriegelungsposition, also beispielweise im Bereich des oder am jeweils ersten Ende des Langlochs und des zweiten Langlochs, sind. Das erfindungsgemäße Anschlagelement dient somit als in beide Drehrichtungen selbstsichernder Federspannring.

Zur Bewegung des Betätigungsbereichs des zweiten Gewindeeinsatzes kann das oben beschriebene, drehbar auf dem Anschlagelement gelagerte Entriegelungselement auf seiner Innenseite eine zweite Nut aufweisen, in die der Betätigungsbereich des zweiten Gewindeeinsatzes eingreift.

Durch eine Bewegung des Betätigungsbereichs des Gewindeeinsatzes wird eine Drehung des Anschlagelementes in einer ersten Drehrichtung ermöglicht. Wird demgegenüber der Betätigungsbereich des zweiten Gewindeeinsatzes bewegt, wird eine Drehung des Anschlagelementes in die andere Richtung ermöglicht. Der Bediener kann somit entscheiden, ob er eine erste Drehrichtung und somit eine Bewegung des Anschlagelementes in einer ersten Richtung entlang der Längsrichtung des Zylinders ermöglichen will. In diesem Fall ist der jeweilige Betätigungsbereich von der Verrieglungsposition, also vom ersten Ende des jeweiligen Langlochs wegzubewegen. Soll das Anschlagelement demgegenüber in die andere Richtung entlang der Längsrichtung des Zylinders bewegt werden, muss der andere Betätigungsbereich im anderen Langloch von der Verrieglungsposition, also vom ersten Ende wegbewegt werden.

Es kann vorgesehen sein, dass das Langloch und das zweite Langloch axial voneinander beabstandet sind. Dabei kann auch vorgesehen sein, dass das Langloch und das zweite Langloch sich nur in Bezug auf die Position entlang der Längsrichtung des Anschlagelements unterscheiden, das heißt das zweite Langloch ist in axialer Richtung oberhalb oder unterhalb des Langlochs angeordnet und weist dieselbe Dimension auf. Bevorzugt ist dabei vorgesehen, dass das erste Ende des Langlochs entgegengesetzt zum ersten Ende des zweiten Langlochs angeordnet ist. Dadurch wirken der Gewindeeinsatz und der zweite Gewindeeinsatz gegengleich.

Das Haltemittel und/oder das zweite Haltemittel können in axialer Richtung zwischen dem Langloch und dem zweiten Langloch angeordnet sein.

Bevorzugt ist vorgesehen, dass die Innenseite des Anschlagelements, in der der Zylinder angeordnet wird, in jenem Bereich, in dem der Gewindeeinsatz und/oder der zweite Gewindeeinsatz angeordnet ist, frei von einem Innengewinde ist. Dadurch besteht genügend Platz zur Vergrößerung des Durchmessers des Gewindeeinsatzes und/oder des Durchmessers des zweiten Gewindeeinsatzes, um diese mit den Gewindegängen des Außengewindes außer Eingriff zu bringen und eine Drehung des Anschlagelementes zu ermöglichen. Alternativ wäre es auch möglich, dass das Anschlagelement in jenem Bereich, in dem der Gewindeeinsatz und/oder der zweite Gewindeeinsatz angeordnet ist, zwar mit einen Innengewinde versehen ist, allerdings einen größeren Innendurchmesser aufweist, als in jenem Bereich oder jenen Bereichen in dem oder in denen ein Innengewinde angeordnet ist, das mit dem Außengewinde des Zylinders in Eingriff ist. Auch dadurch wird Raum für die Vergrößerung des Durchmessers des Gewindeeinsatzes und/oder des Durchmessers des zweiten Gewindeeinsatzes geschaffen. Das Innengewinde im Bereich mit größerem Innendurchmesser kann zur Anordnung des Gewindeeinsatzes und/oder der zweite Gewindeeinsatzes dienen.

Dabei kann es vorgesehen sein, dass oberhalb des Bereichs ohne Innengewinde und/oder unterhalb des Bereichs ohne Innengewinde das Anschlagelement mit einem zum Außengewinde des Zylinders korrespondierenden Innengewinde versehen ist. Sofern oberhalb und unterhalb ein Innengewinde vorgesehen ist, kann ein Bereich mit Innengewinde in axialer Hinsicht eine größere Ausdehnung aufweisen als der andere. Der Bereich mit größerer axialer Erstreckung dient dann im Wesentlichen zur Befestigung des Anschlagelements, während der andere Bereich beispielsweise vor allem zur Abdichtung dient.

In einer weiteren Ausführungsform der Erfindung ist vorgesehen, dass zwischen dem Anschlagelement und der Schraubenfeder ein, vorzugsweise metallischer, Anschlagring angeordnet ist. Dieser Anschlagring kann mit dem Anschlagelement befestigt sein oder auch lose am Anschlagelement anliegen. Der Anschlagring kann direkt mit der Schraubenfeder in Verbindung sein. Insbesondere bei einem metallischen Anschlagring ist es möglich, das Anschlagelement aus Kunststoff herzustellen. Der Gewindeeinsatz und/oder der zweite Gewindeeinsatz sind bevorzugt metallisch, etwas aus Federstahl.

Weitere Vorteile und Einzelheiten der Erfindung werden für verschiedene Ausführungsbeispiele anhand der folgenden Figuren diskutiert. Dabei zeigen:
- Fig. 1a-1c: eine Seitenansicht sowie eine Querschnittsdarstellung eines erfindungsgemäßen Federbeins und eine schematische Darstellung eines Motorrads mit einem erfindungsgemäßen Federbein,
- Fig. 2: eine perspektivische Ansicht eines erfindungsgemäßen Anschlagelements,
- Fig. 3: eine Querschnittsdarstellung eines erfindungsgemäßen Anschlagelements,
- Fig. 4: eine Detailansicht zur Querschnittsdarstellung eines erfindungsgemäßen Federbeins,
- Fig. 5: eine perspektivische Ansicht eines Entriegelungselements,
- Fig. 6a - 6e: eine Explosionsdarstellung, eine perspektivische Ansicht und Seitenansichten einer weiteren Ausführungsform eines erfindungsgemäßen Anschlagelements,
- Fig. 7a, 7b: perspektivische Ansichten einer weiteren Ausführungsform eines Entriegelungselements,
- Fig. 8a, 8b: eine Explosionsdarstellung und eine perspektivische Ansicht der weiteren Ausführungsform des Anschlagelements mit Entriegelungselement,
- Fig. 9a-9d: drei Querschnittdarstellungen eines weiteren Ausführungsform eines erfindungsgemäßen Anschlagelements mit Entriegelungselement, und
- Fig. 10a-10c: schematische Darstellungen zur Funktionsweise des Anschlagelements.

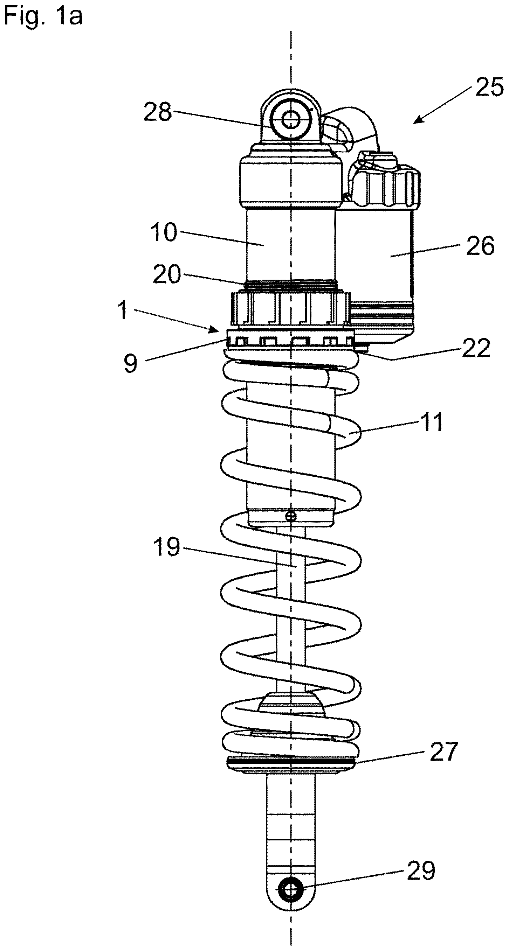

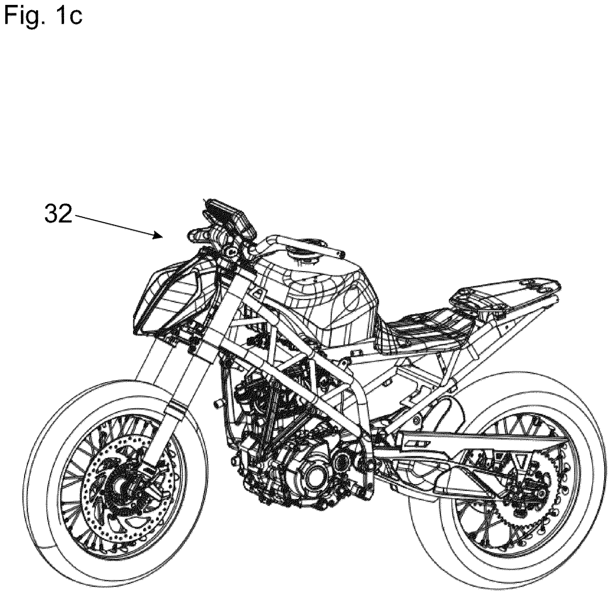

Fig. 1a zeigt eine Seitenansicht eines Federbeins 25 für die Federung und die Dämpfung der Bewegungen des Hinterrads eines Motorrads 32. Ein Beispiel eines Motorrads 32 mit eingebautem Federbein 25 ist in der Fig. 1c gezeigt.

Das Federbein 25 ist über Lagerstellen 28, 29 mit dem Motorrad 32 verbunden. Das Federbein 25 weist eine Schraubenfeder 11 auf, die zwischen einem Anschlagelement 1 mit einem Anschlagring 22 an ihrem ersten Ende und einem zweiten Anschlagelement 27 an ihrem anderen Ende gelagert ist. Das Federbein 25 weist weiters einen Stoßdämpfer zur Dämpfung der Federbewegung auf, der einen Zylinder 10 sowie einen im Zylinder 10 bewegbaren Kolben 19 umfasst. Ein Behälter 26 dient zur Speicherung des Dämpfermediums.

Während die Position des zweiten Anschlagelements 27 fixiert ist, kann die Vorspannung der Schraubenfeder 11 durch eine Veränderung der Position des Anschlagelements 1 entlang der Längsrichtung L des Zylinders 10 verstellt werden. Wird die Schraubenfeder 11 zusammengedrückt und somit stärker vorgespannt, ergibt sich ein härter abgestimmtes Fahrwerk. Wird die Länge der Schraubenfeder 11 ausgedehnt und somit die Vorspannung reduziert, ergibt sich ein weicher abgestimmtes Fahrwerk.

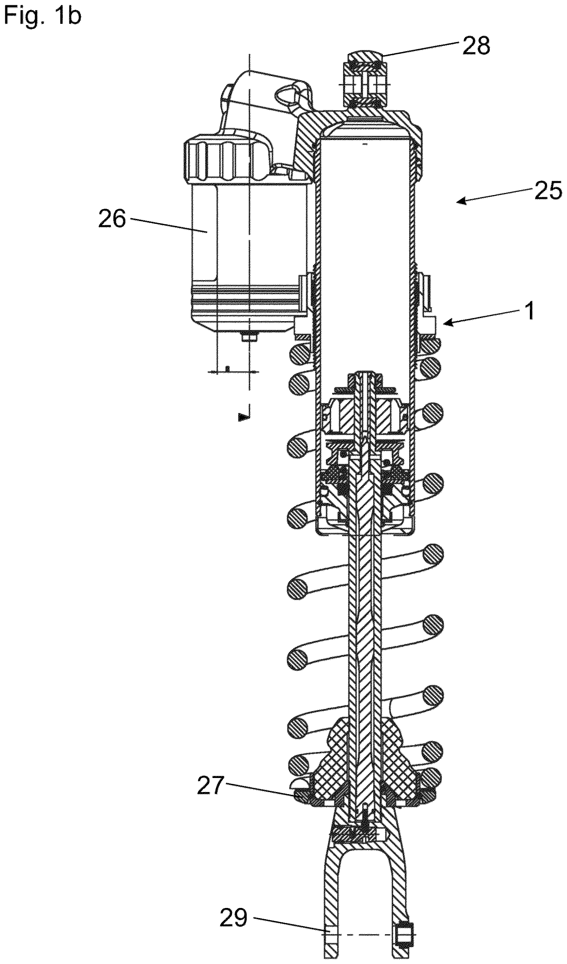

Die Fig. 1b zeigt das Federbein 25 gemäß Fig. 1a in einer Querschnittsdarstellung. Dabei ist erkennbar, wie der Kolben 19 im Inneren des Zylinders 10 bewegbar ist. Die Funktionsweise des Stoßdämpfers ist abgesehen von der Funktionsweise des Anschlagelements 1 an sich im Stand der Technik bekannt.

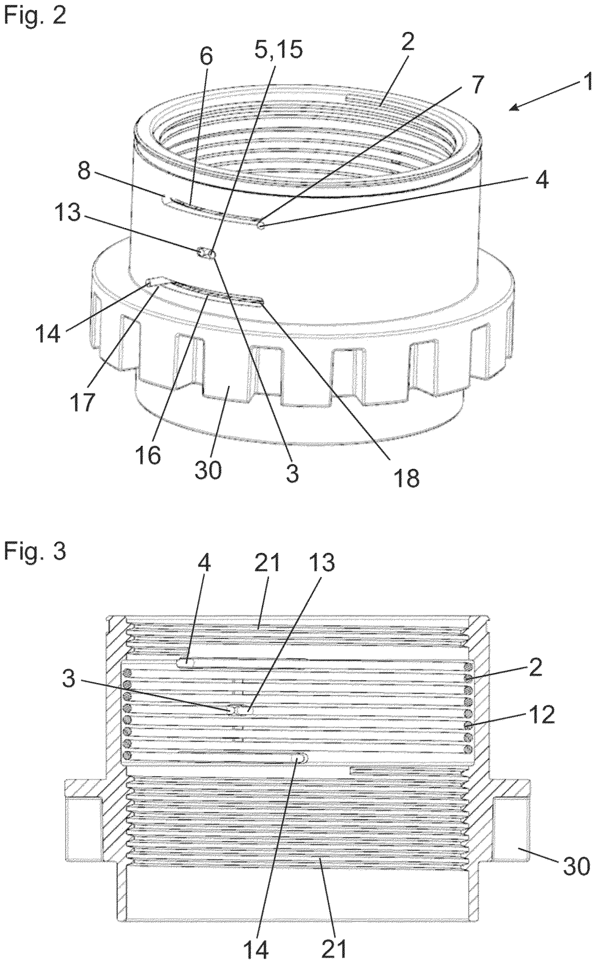

In Fig. 2 ist eine perspektivische Darstellung eines erfindungsgemäßen Anschlagelements 1 gezeigt. Das Anschlagelement 1 weist einen Gewindeeinsatz 2 auf, der unterhalb eines ersten Bereichs mit einem Innengewinde 21 im Anschlagelement 1 angeordnet ist. Der Bereich 31, in dem der Gewindeeinsatz 2 angeordnet ist, ist frei von einem Innengewinde. Der Gewindeeinsatz 2 ist als Schraubenfeder ausgebildet, wobei beide Federenden radial nach außen gebogen sind. Das in dieser Darstellung obere Federende ist weiter nach außen gebogen und stellt den Betätigungsbereich 4 dar. Das andere Federende stellt den Haltebereich 3 dar und ist in einem als Bohrung ausgebildeten Haltemittel 5 befestigt. Aufgrund der Federwirkung drückt der Betätigungsbereich 4 in der Verriegelungsposition gegen ein erstes Ende 7 des Langlochs 6. Das Langloch 6 ist ebenso wie das zweite Langloch 16 im Wesentlichen parallel zu den Windungen des Gewindeeinsatzes 2 und somit 16 im Wesentlichen parallel zu den Gewindegängen des Innengewindes 21 angeordnet. Da der Gewindeeinsatz 2 in den Gewindegängen des am Zylinder 10 angeordneten Außengewindes 20 anordenbar ist, sind die Langlöcher 6 und 16 auch im Wesentlichen parallel zu den Gewindegängen des Außengewindes 20 angeordnet.

Der Betätigungsbereich 4 ist bewegbar im Langloch 6 gelagert, wobei durch eine Bewegung des Betätigungsbereichs 4 in Richtung des anderen Endes 8 des Langlochs 6 und somit entgegen der Federkraft des Gewindeeinsatzes 2 der Durchmesser des Gewindeeinsatzes 2 vergrößert wird, wodurch der Gewindeeinsatz 2 mit den Gewindegängen des Außengewindes 20 außer Eingriff gerät oder zumindest die wirkende Reibkraft deutlich verringert wird.

Unterhalb des Gewindeeinsatzes 2 ist ein zweiter Gewindeeinsatz 12 angeordnet, der gleich wie der Gewindeeinsatz 2 ausgebildet ist. Allerdings ist der Betätigungsbereich 14 des zweiten Gewindeeinsatzes 12 in dieser Darstellung unterhalb des Haltebereichs 13 des zweiten Gewindeeinsatzes 12 angeordnet. Der zweite Gewindeeinsatz 12 ist somit im Vergleich zum Gewindeeinsatz 2 verkehrt im Anschlagelement 1 angeordnet. Das zweite Haltemittel 15, in dem der Haltebereich 13 des zweiten Gewindeeinsatzes 12 angeordnet ist, entspricht dem Haltemittel 5, das heißt beide Haltebereiche 3, 13 sind im selben Haltemittel befestigt, das sich zwischen dem Langloch 6 und dem zweiten Langloch 16 befindet.

Aufgrund der umgekehrten Anordnung wirkt der als Schraubenfeder ausgebildete zweite Gewindeeinsatz 12 ausgebildet ist, entgegengesetzt zu dem als Schraubenfeder ausgebildeten Gewindeeinsatz 2. Dementsprechend ist das erste Ende 17 des zweiten Langlochs 16, gegen das der Betätigungsbereich 14 des zweiten Gewindeeinsatzes 12 in der Verriegelungsposition aufgrund der Federwirkung drückt, auf der dargestellt linken Seite des zweiten Langlochs 16 angeordnet, während das erste Ende 7 des Langlochs 6 auf der dargestellt rechten Seite des Langlochs 6 angeordnet ist.

Wird der Betätigungsbereich 14 des zweiten Gewindeeinsatzes 12 nach rechts in Richtung des anderen Endes 18 des zweiten Langlochs 16 bewegt, vergrößert sich der Durchmesser des zweiten Gewindeeinsatzes 12 entgegen der Federkraft. Für die Vergrößerung der Durchmesser des Gewindeeinsatzes 2 und des zweiten Gewindeeinsatzes 12 steht der Bereich 31 des Anschlagelements 1 zur Verfügung, indem kein Innengewinde 21 vorgesehen ist. Auf der Außenseite des Anschlagelements 1 ist ein Drehbereich 30 vorgesehen, der zur Drehung des Anschlagelements 1 vorgesehen ist. Zu diesem Zweck weist der Drehbereich 30 Erhebungen und Vertiefungen auf, an die ein passendes Werkzeug angesetzt werden kann.

Die Fig. 3 zeigt eine Querschnittsdarstellung des Anschlagelements 1 gemäß Fig. 2. Darin ist der Bereich 31, der frei von einem Innengewinde 21 ist, gut erkennbar. Im Bereich 31 ist der Gewindeeinsatz 2 und der zweite Gewindeeinsatz 12 angeordnet. Oberhalb des Gewindeeinsatzes 2 ist die Innenseite des Anschlagelements 1 mit einem ersten Bereich mit einem Innengewinde 21 versehen. Dieser Bereich weist jedoch nur eine geringe axiale Ausdehnung auf und dient vor allem dazu, den Eintritt von Schmutz in das Anschlagelement 1 zu verhindern, wenn dieses auf dem Außengewinde 20 des Zylinders 10 angeordnet ist. Unterhalb des zweiten Gewindeeinsatzes 12 ist ein größerer Bereich mit einem Innengewinde 21 versehen. Das Innengewinde 21 korrespondiert mit dem Außengewinde 20. In aufgeschraubtem Zustand werden die auf die Schraubenfeder 11 wirkenden Kräfte über die Verbindung zwischen Innengewinde 21 und Außengewinde 20 auf den Zylinder 10 und somit den Stoßdämpfer übertragen.

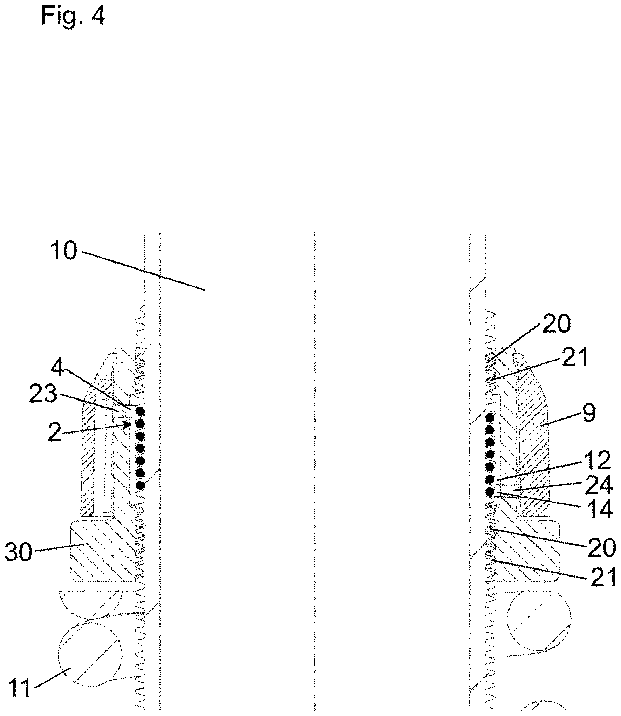

Die Fig. 4 zeigt eine Querschnittsdarstellung, in der das Anschlagelement 1 in montiertem Zustand erkennbar ist. Dabei handelt es sich um eine Detaildarstellung der Querschnittsdarstellung der Fig. 1b. Erkennbar ist die Verbindung zwischen dem Innengewinde 21 des Anschlagelements 1 und dem Außengewinde 20 des Zylinders 10, wodurch die während des Fahrens auf die Schraubenfeder 11 wirkenden Kräfte auf den Zylinder 10 übertragen werden. Dazu dient vor allem der untere Bereich des Innengewindes 21. Am oberen Ende des Anschlagelements 1 ist ein weiterer Bereich mit einem Innengewinde 21 vorgesehen. Dieser Bereich dient hauptsächlich dazu, das Innere des Anschlagelements 1 vor Verschmutzung zu schützen. Im Bereich 31 ist das Anschlagelement 1 auf seiner Innenseite frei von einem Innengewinde. Dieser Bereich dient dazu, die Vergrößerung der Durchmesser der Gewindeeinsätze 2, 12 zu ermöglichen. Im dargestellten Zustand sind die Gewindeeinsätze 2, 12, die als Schraubenfedern ausgebildet sind, mit den Gewindegängen des Außengewindes 20 in Eingriff. Eine unabsichtliche Drehung des Anschlagelements 1 und somit eine Verstellung dessen Position entlang der Längsrichtung L des Zylinders 10 ist nicht möglich. Zur Bewegung der Betätigungsbereiche 4, 14 ist ein drehbar am Anschlagelement 1 gelagertes Entriegelungselement 9 vorgesehen, welches über eine erste Nut 23 und eine zweite Nut 24 verfügt, in die die Betätigungsbereiche 4, 14 eingreifen.

Der obere Gewindeeinsatz 2 verhindert eine Drehung des Anschlagelementes 1 im Uhrzeigersinn (bei Blickrichtung auf die obere Öffnung des Anschlagelements 1). Eine Drehung entgegen dem Uhrzeigersinn ist allerdings möglich, da hierbei der Gewindeeinsatz 2 vom Haltebereich 3 mitgeschleppt wird. Der Gewindeeinsatz 2 verhindert somit die Drehung des Anschlagelements 1 nur in Bezug auf eine Drehrichtung. Bei einem als Rechtsgewinde ausgebildeten Außengewinde 20 sichert der Gewindeeinsatz 2 gegen eine Bewegung des Anschlagelements 1 nach unten und somit gegen eine Erhöhung der Vorspannung der Schraubenfeder 21, wenn diese unterhalb des Drehbereichs 30 am Anschlagelement 1 anliegt.

Demgegenüber sichert der zweite Gewindeeinsatz 12 gegen eine Bewegung des Anschlagelements 1 nach oben und somit gegen eine Reduzierung der Vorspannung, sofern die Schraubenfeder 11 unterhalb des Drehbereichs 30 am Anschlagelement 1 anliegt und das Außengewinde 20 als Rechtsgewinde ausgebildet ist. Bei Blickrichtung auf die obere Öffnung des Anschlagelements 1 (gemäß Fig. 2) verhindert der zweite Gewindeeinsatz 12 nämlich eine Drehung des Anschlagelements 1 entgegen dem Uhrzeigersinn. Eine Drehung im Uhrzeigersinn ist allerdings möglich, weil hier der der zweite Gewindeeinsatz 12 vom zweiten Haltebereich 13 mitgeschleppt wird.

Die Gewindeeinsätze 2, 12 zusammen verunmöglichen, wenn beide Betätigungsbereiche 4, 14 in ihrer Verriegelungsposition sind, eine Drehung des Anschlagelements 1 in Bezug auf beide Drehrichtungen und verhindern somit generell eine Verstellung der Position des Anschlagelements 1 in Bezug auf die Längsrichtung L des Zylinders 10. Es handelt sich somit beim Anschlagelement 1 um einen selbstsichernden Federspannring, wobei die Sicherungskraft durch die Federkraft der Gewindeeinsätze 2, 12 vorgegeben ist, und ein zu starkes oder zu schwaches Anziehen nicht möglich ist. Um eine Verstellung der Position des Anschlagelements 1 in die eine oder die andere Richtung entlang der Längsrichtung L des Zylinders 10 zu ermöglichen, muss selektiv entweder der Betätigungsbereich 4 des Gewindeeinsatzes 2 in Richtung des anderen Endes 8 des Langlochs 6 bewegt werden oder der Betätigungsbereich 14 des zweiten Gewindeeinsatzes 12 in Richtung des anderen Endes 18 des zweiten Langlochs 16.

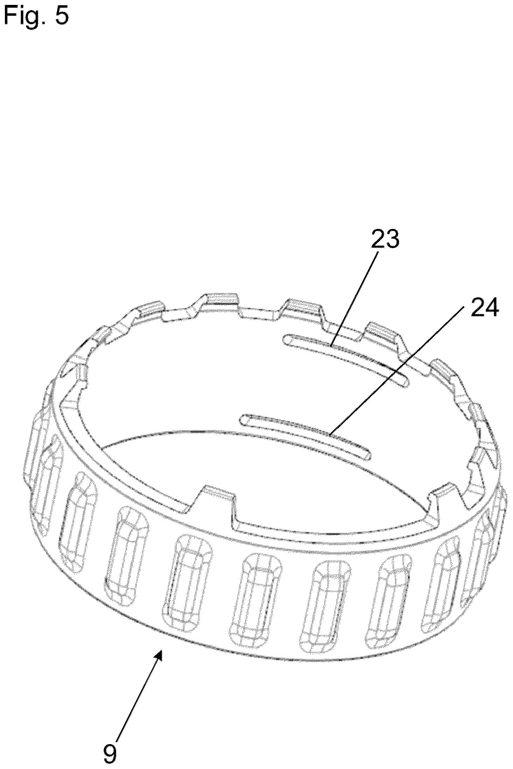

Die Fig. 5 zeigt eine perspektivische Darstellung des Entriegelungselements 9, welches drehbar am Anschlagelement 1 gelagert ist. Zur leichteren Drehung sind auf der Außenseite des Entriegelungselements 9 eine Reihe von Erhebungen angeordnet. Auf der Innenseite ist eine erste Nut 23 angeordnet, in die der Betätigungsbereichs 4 des Gewindeeinsatzes 2 eingreift. Eine zweite Nut 24 dient zum Eingriff des Betätigungsbereichs 14 des zweiten Gewindeeinsatzes 12. Die erste Nut 23 und die zweite Nut 24 sind in ihren Längsrichtungen beschränkt. Dreht man daher das Entriegelungselement 9 bis der Betätigungsbereich 4 an einem Ende der ersten Nut 23 anschlägt, wird bei weiterer Drehung des Entriegelungselementes 9 der Betätigungsbereich 4 mitbewegt. Gleiches gilt für den Betätigungsbereich 14 des zweiten Gewindeeinsatzes 12, wenn dieser an einem Ende der zweiten Nut 24 anschlägt. Je nach Drehrichtung des Entriegelungselementes 9 wird somit der Betätigungsbereich 4 in Richtung des anderen Endes 8 des Langlochs 6 oder der Betätigungsbereich 14 des zweiten Gewindeeinsatzes 12 in Richtung des anderen Endes 18 des zweiten Langlochs 16 bewegt. Dadurch kann die Sicherung in Bezug auf die eine oder die andere Drehrichtung des Anschlagelements 1 gelöst werden.

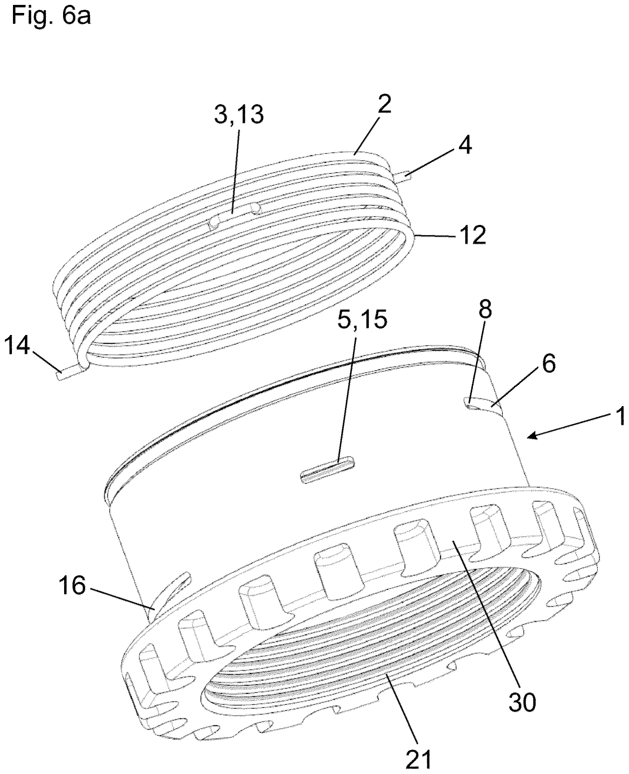

Die Fig. 6a zeigt eine Explosionsdarstellung eines Anschlagelements 1 und der im Anschlagelement 1 anzuordnenden Gewindeeinsätze 2, 12. In dieser Ausführungsform der Erfindung ist der Gewindeeinsatz 2 und der zweite Gewindeeinsatz 12 als ein einziger Gewindeeinsatz ausgebildet, wobei die Haltebereiche 3, 13 ineinander übergehen und einen einzigen Haltebereich ausbilden, der in einem Haltemittel 5, 15 im Anschlagelement 1 angeordnet wird. Das Haltemittel 5 und das zweite Haltemittel 15 sind daher identisch und als ein gemeinsames Haltemittel ausgebildet. Erkennbar ist weiters das Innengewinde 21, in dem die Gewindeeinsätze 2, 12 angeordnet werden sowie das Langloch 6 und das zweite Langloch 16, in denen der Betätigungsbereich 4 und der zweite Betätigungsbereich 14 verschiebbar gelagert sind.

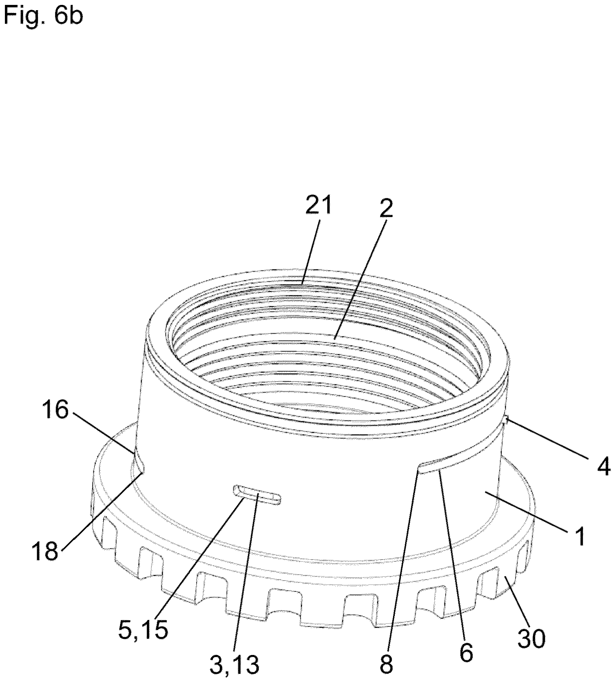

Die Fig. 6b zeigt eine perspektivische Ansicht eines Anschlagelements 1 gemäß der Figur 6a, bei dem die Gewindeeinsätze 2, 12 gemäß der Fig. 6a im Anschlagelement 1 angeordnet sind. Erkennbar ist, dass im oberen Bereich des Anschlagelements 1 ein weiterer Bereich mit einem Innengewinde 21 versehen ist. Dieser Bereich dient hauptsächlich zur Abdichtung gegenüber Schmutz. Der gemeinsame Haltebereich 3, 13 ist im gemeinsamen Haltemittel 5, 15 angeordnet. Der Betätigungsbereich 4 ist verschiebbar im Langloch 6 angeordnet, wobei in dieser Stellung der Betätigungsbereich 4 im Bereich des ersten Endes 7 angeordnet ist. Der zweite Betätigungsbereich 14 ist verschiebbar im zweiten Langloch 16 angeordnet, wobei der Betätigungsbereich 14 im Bereich des ersten Endes 17 des zweiten Langlochs 16 befindlich ist.

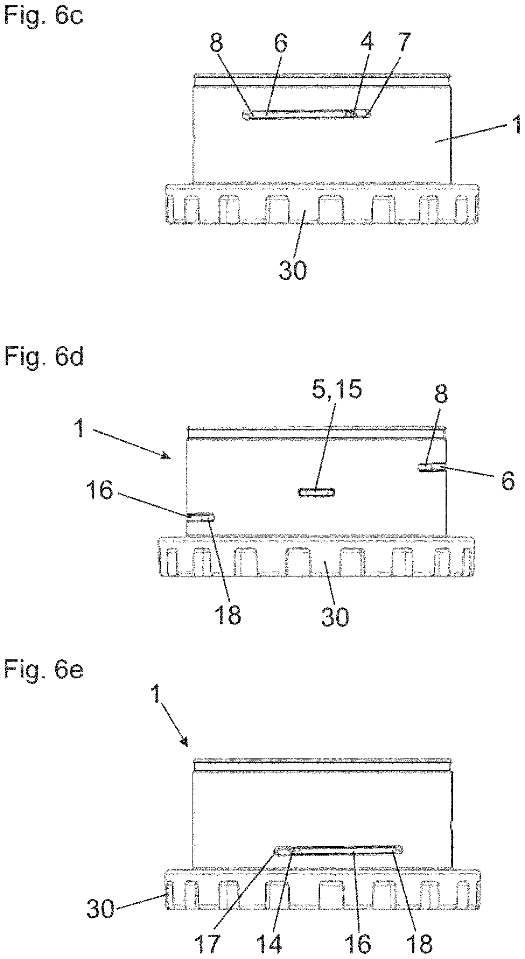

Die Figuren 6c bis 6e zeigen in Seitenansichten das Anschlagelement 1 gemäß der Fig. 6b. Dabei ist in Fig. 6c erkennbar, dass der Betätigungsbereich 4 im Langloch 6 im Bereich des ersten Endes 7 angeordnet ist. Dies ist die Verriegelungsposition des Betätigungsbereichs 4. Die Bewegung des Betätigungsbereichs 4 aufgrund der Federwirkung des Gewindeeinsatzes 2 ist gemäß dieser Ausführungsform zum Stillstand gekommen, bevor der Betätigungsbereich 4 am ersten Ende 7 anliegt. Der Gewindeeinsatz 2 übt eine hohe Reibkraft auf das Außengewinde 20 aus und verhindert eine Drehung des Anschlagelements 1 im Uhrzeigersinn (bei einem Blick von oben, also auf die dem Drehbereich 30 entgegengesetzte Seite des Anschlagelements 1).

In der Fig. 6d ist vor allem die Ausnehmung erkennbar, die als gemeinsames Haltemittel 5, 15 für den gemeinsamen Haltebereich 3, 13 des Gewindeeinsatzes 2 und des zweiten Gewindeeinsatzes 12 dient. Erkennbar ist weiters das zweite Ende 8 des Langlochs 6 sowie das zweite Ende 18 des zweiten Langlochs 16. Das zweite Ende 8 und das zweite Ende 18 liegen somit auf entgegengesetzten Seiten des jeweiligen Langlochs.

In Fig. 6e ist erkennbar, dass der Betätigungsbereich 14 des zweiten Gewindeeinsatzes 12 im Bereich des ersten Endes 17 des zweiten Langlochs 16 angeordnet ist.. Dies ist die Verriegelungsposition des Betätigungsbereichs 14 des zweiten Gewindeeinsatzes 12.Wie im Fall des Gewindeeinsatzes 2 ist die von der Federkraft bewirkte Bewegung des Betätigungsbereichs 14 des zweiten Gewindeeinsatzes 12 zum Stillstand gekommen, bevor der Betätigungsbereich 14 am ersten Ende 17 des zweiten Langlochs 16 anliegt. Der zweite Gewindeeinsatz 12 verhindert durch die bewirkte Reibkraft eine Drehung entgegen dem Uhrzeigersinn, wiederum bei einer Betrachtung von oben - also auf die den Drehbereich 30 entgegengesetzte Seite des Anschlagelements 1. Insgesamt befinden sich beide Betätigungsbereiche 4, 14 in den Verriegelungspositionen, sodass eine Drehung des Anschlagelements in beide Drehrichtungen verhindert wird.

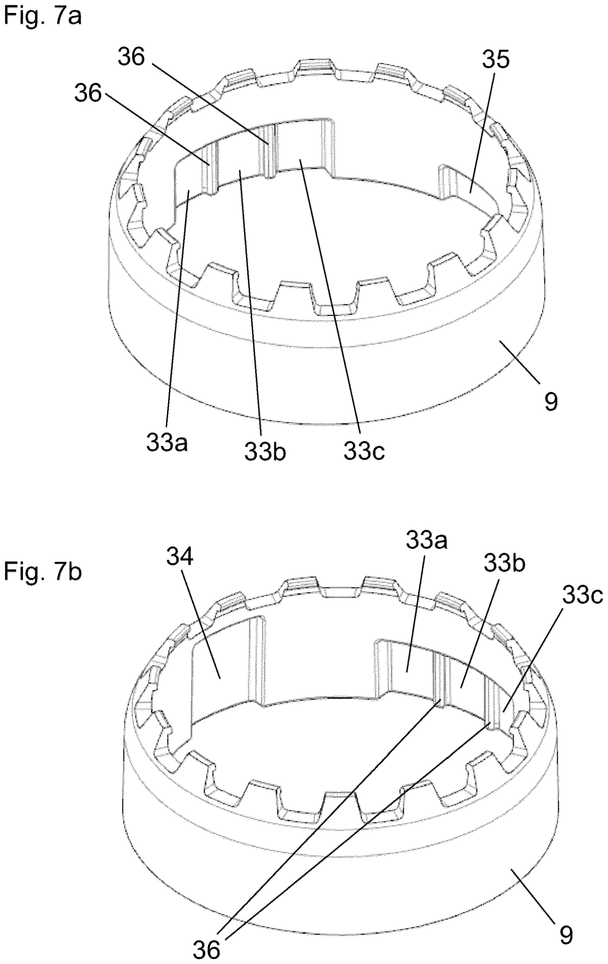

In den Figuren 7a und 7b sind perspektivische Ansichten des Entriegelungselements 9 aus verschiedenen Winkeln dargestellt. Dabei eine Ausnehmung erkennbar, die in drei Abschnitte 33a, 33b und 33c unterteilt ist, die mit Zwischenstegen 36 voneinander abgegrenzt sind. Die Abschnitte33a, 33b und 33c dienen als Rastpositionen für die Betätigungsbereiche 4, 14 in den jeweiligen Verriegelungspositionen. Dabei werden aber nicht die Betätigungsbereiche 4, 14 selbst in den Abschnitten 33a, 33b oder 33c angeordnet, sondern die Haltebereiche 3, 13, beispielsweise wenn diese - wie in Fig. 6a dargestellt - als gemeinsamer Haltebereich in Form einer Lasche ausgebildet sind. Die Abschnitte können aber auch anders ausgebildet sein, um als Rastposition für anders ausgebildete Haltebereiche 3, 13 zu dienen.

Befinden sich beide Betätigungsbereiche 4, 14 in der jeweiligen Verriegelungsposition, wird das Entriegelungselement 9 derart angeordnet, dass der gemeinsame Haltebereich im Abschnitt 33b angeordnet ist. Die, gegebenenfalls federnd ausgebildeten, Zwischenstege 36 verhindern, dass das Entriegelungselement 9 unfreiwillig bewegt wird. Dies stellt ein weiteres Sicherheitsmerkmal der vorliegenden Erfindung dar. Der Betätigungsbereich 4 des Gewindeeinsatzes 2 wird in der ersten Führungsausnehmung 34 angeordnet, der Betätigungsbereich 14 des zweiten Gewindeeinsatzes 12 wird in der zweiten Führungsausnehmung 35 angeordnet. Da sich der Betätigungsbereich 14 im unteren Abschnitt befindet, während der Betätigungsbereich 4 im oberen Abschnitt angeordnet ist, weist die erste Führungsausnehmung 34 eine größere axiale Erstreckung aus als die zweite Führungsausnehmung 35. Dadurch ist es nicht möglich, den Betätigungsbereich 4 in der zweiten Führungsausnehmung 35 anzuordnen. Die Ausgestaltung der ersten Führungsausnehmung 34 und der zweiten Führungsausnehmung 35 gewährleisten dadurch die korrekte Anordnung des Entriegelungselementes 9.

Bei einer Drehung des Entriegelungselementes 9 in eine erste Drehrichtung wird der Betätigungsbereich 4 durch den Rand der ersten Führungsausnehmung 34 mitbewegt. Gleichzeitig wird der gemeinsame Haltebereich in den ersten Abschnitt 33a bewegt. Aufgrund des als Rastelement dienenden Zwischenstegs 36 wird verhindert, dass sich das Entriegelungselement 9 relativ zum Gewindeeinsatz 2 bewegt. Dadurch wird der Betätigungsbereich 4 in jener Position gehalten, in der eine Drehung des Anschlagelements 1 möglich ist. Der Abschnitt 33a definiert somit eine Rastposition für den Betätigungsbereich 4 und es ist nicht notwendig, das Entriegelungselement 9 manuell zu halten, um zu verhindern, dass der Betätigungsbereich 4 aufgrund der Federwirkung des Gewindeeinsatzes 2 von sich aus in die Verriegelungsposition zurückbewegt wird.

Bei einer Drehung des dargestellten Entriegelungselements 9 in die andere Drehrichtung wird der zweite Betätigungsbereich 14 vom Rand der zweiten Führungsausnehmung 35 mitbewegt, gleichzeitig wird der gemeinsame Haltebereich in den Abschnitt 33c bewegt und aufgrund des Zwischenstegs 36 dort gehalten. Dadurch wird der Betätigungsbereich 14 in jener Position gehalten, in der eine Drehung des Anschlagelements 1 möglich ist. Der Abschnitt 33c definiert somit eine Rastposition für den Betätigungsbereich 14 des zweiten Gewindeeinsatzes 12. Der Zwischensteg 36 verhindert, dass das Entriegelungselement 9 relativ zum zweiten Gewindeeinsatz 12 bewegt wird, indem der gemeinsame Haltebereich in den Abschnitt 33b bewegt wird. Dadurch wird verhindert, dass sich der von seiner Verriegelungsposition wegbewegte Betätigungsbereich 14 des zweiten Gewindeeinsatzes 12 aufgrund der Federwirkung von sich aus in die Verriegelungsposition zurückbewegt wird.

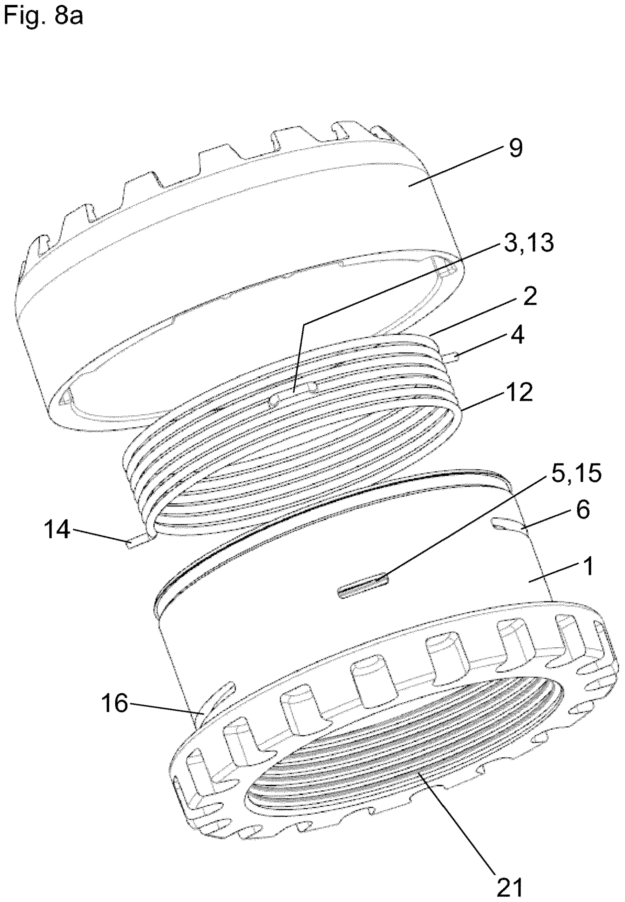

Die Explosionsdarstellung der Fig. 8a entspricht jener der Fig. 6a, wobei hier zusätzlich das Entriegelungselement 9 gemäß der Figuren 7a und 7b dargestellt ist.

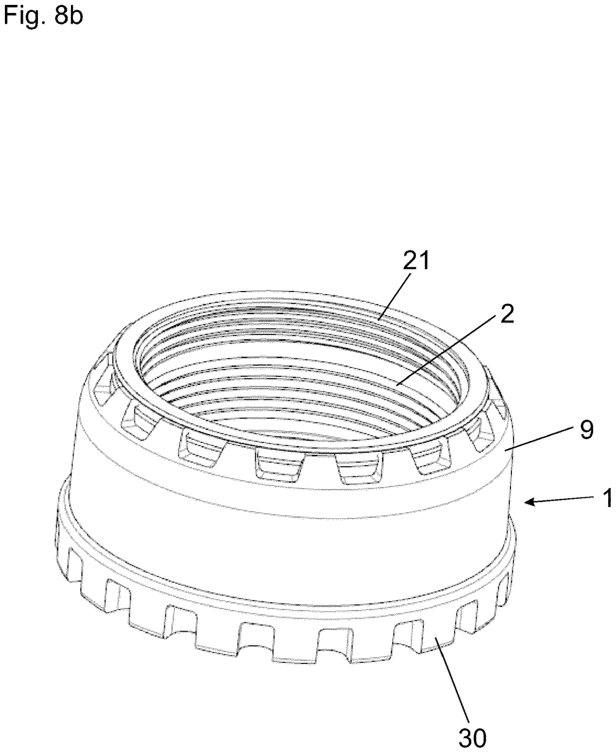

Die perspektivische Ansicht der Fig. 8b entspricht jener der Fig. 6b, wobei hier zusätzlich noch das drehbar gelagerte Entriegelungselement 9 gemäß der Figuren 7a und 7b auf dem Anschlagelement 1 angeordnet ist.

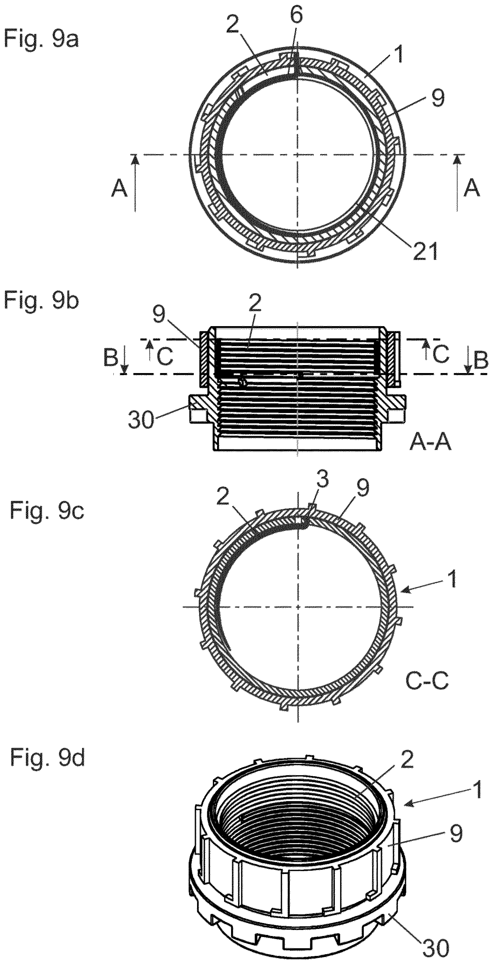

Die Fig. 9a zeigt eine Querschnittsdarstellung einer weiteren Ausführungsform des Anschlagelements 1 der Fig. 9d entlang der in Fig. 7b dargestellten Schnittlinie B-B. Hierbei ist erkennbar, wie der Betätigungsbereich 4 des Gewindeeinsatzes 2 nach außen ragt und von einer Ausnehmung im Entriegelungselement 9 befestigt ist. Durch eine Drehung des Entriegelungselements 9 kann der Betätigungsbereich 4 im Langloch 6 bewegt werden.

Die Fig. 9b zeigt eine Querschnittsdarstellung entlang der in Fig. 9a dargestellten Schnittlinie A-A. in dieser Ausführungsform der Erfindung ist nur ein Bereich der Innenseite des Anschlagelements 1 mit einem Innengewinde 21 versehen.

In der Fig. 9c ist eine Querschnittsdarstellung entlang der in Fig. 9b dargestellten Schnittlinie C-C gezeigt Hierbei ist erkennbar, wie der Haltebereich 3 des Gewindeeinsatzes 2 nach außen ragt und im Haltemittel 5 in Form einer Ausnehmung im Anschlagelement 1 befestigt ist.

Die Figur 9d zeigt eine perspektivische Ansicht der in den Figuren 9a bis 9c gezeigten Ausführungsform des Anschlagelements 1. In dieser Variante der Erfindung weist das Anschlagelement nur einen Gewindeeinsatz 2 auf, sodass die Drehung des Anschlagelements 1 nur in Bezug auf eine Drehrichtung sperrbar ist.

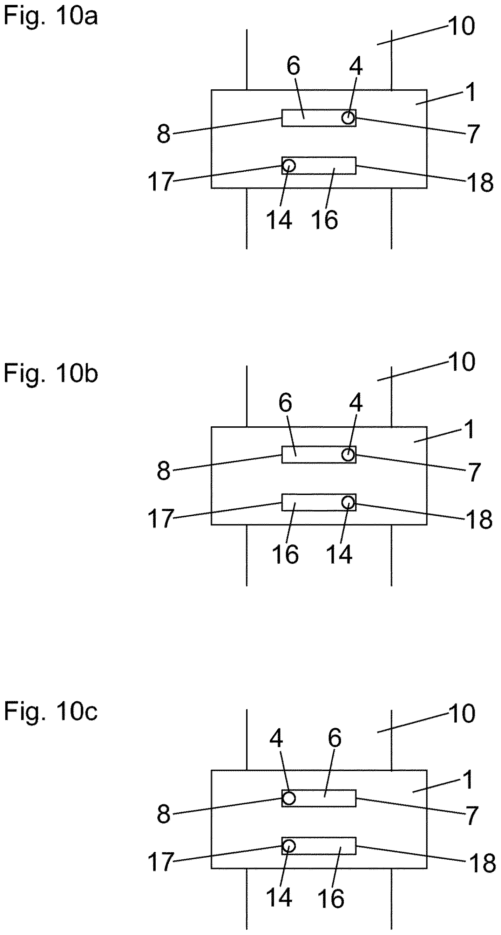

In der schematischen Darstellung der Fig. 10a ist das Anschlagelement 1 in der Situation der Fig. 2 dargestellt, wobei der Betätigungsbereich 4 im Bereich des ersten Endes 7 des Langlochs 6, also in der Verriegelungsposition, angeordnet ist. In diesem Zustand ist eine Drehung des Anschlagelements 1 im Uhrzeigersinn verunmöglicht, sodass das Anschlagelement 1 gegen eine Bewegung in Längsrichtung L des Zylinders 10 nach unten gesichert ist. Der Betätigungsbereichs 14 des zweiten Gewindeeinsatzes 12 ist im Bereich des ersten Endes 17 des zweiten Langlochs 16, also in der Verriegelungsposition, angeordnet. In diesem Zustand ist eine Drehung des Anschlagelements 1 entgegen des Uhrzeigersinns verunmöglicht, wodurch das Anschlagelement 1 gegen eine Bewegung in Längsrichtung L des Zylinders 10 nach oben gesichert ist. Insgesamt ist eine Drehung des Anschlagelements 1 in beide Drehrichtungen verunmöglicht.

In der Fig. 10b ist der Betätigungsbereich 14 des zweiten Gewindeeinsatzes 12 gegenüber dem Zustand der Fig. 10a aus der Verriegelungsposition zum anderen Ende 18 des zweiten Langlochs 16 verschoben worden. Dadurch ist eine Drehung des Anschlagelements 1 entgegen des Uhrzeigersinns und somit eine Bewegung der Position des Anschlagelements 1 entlang der Längsrichtung L des Zylinders 10 nach oben möglich. Weiterhin ist das Anschlagelement 1 gegen eine Drehung des Anschlagelements 1 im dem Uhrzeigersinn und somit eine Bewegung des Anschlagelements 1 entlang der Längsrichtung L nach unten gesichert.

In der Fig. 10c ist der Betätigungsbereich 4 gegenüber der Situation der Fig. 10a aus der Verriegelungsposition zum anderen Ende 8 des Langlochs 6 verschoben worden. Dadurch ist eine Drehung des Anschlagelements 1 im Uhrzeigersinn und somit eine Bewegung des Anschlagelements 1 Längsrichtung L des Zylinders 10 nach unten möglich. Weiterhin ist das Anschlagelement 1 gegen eine Drehung des Anschlagelements 1 entgegen dem Uhrzeigersinn und somit eine Bewegung des Anschlagelements 1 in Längsrichtung L nach oben gesichert.

Durch eine Bewegung des Betätigungsbereichs 4 oder des Betätigungsbereichs 14 des zweiten Gewindeeinsatzes 12 kann der Bediener selektiv die Vorspannung der Schraubenfeder 11 erhöhen oder reduzieren, beispielsweise um das Fahrwerk an das Gewicht des Fahrers anzupassen.

### Bezugszeichenliste:

- 1: Anschlagelement
- 2: Gewindeeinsatz
- 3: Haltebereich
- 4: Betätigungsbereich
- 5: Haltemittel
- 6: Langloch
- 7: erstes Ende des Langlochs
- 8: anderes Ende des Langlochs
- 9: Entriegelungselement
- 10: Zylinder
- 11: Schraubenfeder
- 12: zweiter Gewindeeinsatz
- 13: Haltebereich des zweiten Gewindeeinsatz
- 14: Betätigungsbereich des zweiten Gewindeeinsatz
- 15: zweites Haltemittel
- 16: zweites Langloch
- 17: erstes Ende des zweiten Langlochs
- 18: anderes Ende des zweiten Langlochs
- 19: Kolben
- 20: Außengewinde
- 21: Innengewinde
- 22: Anschlagring
- 23: erste Nut
- 24: zweite Nut
- 25: Federbein
- 26: Behälter für Dämpfmedium
- 27: zweites Anschlagelement
- 28, 29: Lagerstellen für Federbein
- 30: Drehbereich
- 31: Bereich ohne Innengewinde
- 32: Motorrad
- 33a, 33b, 33c: Rastpositionen für die Haltebereiche
- 34: erste Führungsausnehmung
- 35: zweite Führungsausnehmung
- 36: Zwischenstege
- L: Längsrichtung des Zylinders

## Patentansprüche

1. Anschlagelement für die Lagerung einer zumindest teilweise um einen Zylinder (10) eines Federbeins angeordneten Schraubenfeder (11), wobei das Anschlagelement (1) zumindest bereichsweise mit einem Innengewinde (21) versehen ist, und wobei zumindest ein im Anschlagelement (1) angeordneter, vorzugsweise federnd und ganz vorzugsweise als Schraubenfeder ausgebildeter, Gewindeeinsatz (2) vorgesehen ist, welcher einen Haltebereich (3) und einen Betätigungsbereich (4) aufweist, wobei durch eine Bewegung des Betätigungsbereichs (4) der Durchmesser des Gewindeeinsatzes (2) veränderbar ist, wobei im Anschlagelement (1) ein, vorzugsweise als Bohrung ausgebildetes, Haltemittel (5) für den Haltebereich (3) vorgesehen ist, **dadurch gekennzeichnet, dass** der Betätigungsbereich (4) innerhalb eines im Anschlagelement (1) angeordneten Langlochs (6) bewegbar im Anschlagelement (1) gelagert ist.

2. Anschlagelement nach Anspruch 1, wobei im Anschlagelement (1) ein zweiter, vorzugsweise federnd und ganz vorzugsweise als Schraubenfeder ausgebildeter, zweiter Gewindeeinsatz (12) angeordnet ist, welcher einen Haltebereich (13) und einen Betätigungsbereich (14) aufweist, und wobei im Anschlagelement (1) ein, vorzugsweise als Bohrung ausgebildetes, zweites Haltemittel (15) für den Haltebereich (13) des zweiten Gewindeeinsatzes (12) vorgesehen ist, und wobei der Betätigungsbereich (14) des zweiten Gewindeeinsatzes (12) , vorzugsweise innerhalb eines im Anschlagelement (1) angeordneten zweiten Langlochs (16) bewegbar im Anschlagelement (1) gelagert ist, und wobei durch eine Bewegung des Betätigungsbereichs (4) des zweiten Gewindeeinsatzes (12) der Durchmesser des zweiten Gewindeeinsatzes (12) veränderbar ist.

3. Federbein für ein Fahrzeug, insbesondere für ein Motorrad, umfassend
• einen Zylinder (10) mit einem im Zylinder (10) bewegbaren Kolben (19),
• eine zumindest teilweise um den Zylinder (10) angeordnete Schraubenfeder (11),
• ein Anschlagelement (1) nach Anspruch 1 oder 2 für die Lagerung der Schraubenfeder (11), wobei die Position des Anschlagelements (1) entlang der Längsrichtung des Zylinders (10) zumindest in Bezug auf eine Richtung einstellbar fixierbar ist, und wobei der Zylinder (10) zumindest bereichsweise mit einem Außengewinde (20) versehen ist, welches mit dem Innengewinde (21) korrespondiert, , wobei zwischen dem Anschlagelement (1) und der Schraubenfeder (11) vorzugsweise ein beispielsweise metallischer Anschlagring (22) angeordnet ist,
wobei der Bereich zwischen dem Haltebereich (3) und dem Betätigungsbereich (4) in den Gewindegängen des Außengewindes (20) des Zylinders (10) anordenbar ist.

4. Federbein nach dem vorhergehenden Anspruch, wobei der Gewindeeinsatz (2) federnd, insbesondere als Schraubenfeder ausgebildet ist.

5. Federbein nach wenigstens einem der Ansprüche 3 oder 4, wobei der Haltebereich (3) und/oder der Betätigungsbereich (4) als radial nach außen weisender Zapfen, insbesondere als radial nach außen gebogenes Federende ausgebildet ist, wobei das Haltemittel (5) vorzugsweise als Bohrung ausgebildet ist, in welcher der Haltebereich (3) befestigbar ist.

6. Federbein nach wenigstens einem der Ansprüche 3 bis 5, wobei der Gewindeeinsatz (2) federnd ausgebildet ist und derart im Anschlagelement (1) angeordnet ist, dass der Betätigungsbereich (4) gegen ein erstes Ende (7) des Langlochs (6) drückt, oder dass der Betätigungsbereich (4) bei Ausbleiben einer externen Kraftbeaufschlagung im Bereich des ersten Endes (7) des Langlochs (6) angeordnet ist.

7. Federbein nach Anspruch 6, wobei bei einer Bewegung des Betätigungsbereichs (4) in Richtung des anderen Endes (8) des Langlochs (6) der Durchmesser des Gewindeeinsatzes (2) vergrößert wird.

8. Federbein nach wenigstens einem der Ansprüche 3 bis 7, wobei im Anschlagelement (1) ein zweiter, vorzugsweise federnd und ganz vorzugsweise als Schraubenfeder ausgebildeter, zweite Gewindeeinsatz (12) anordenbar ist, wobei der zweite Gewindeeinsatz (12) einen Haltebereich (13) und einen Betätigungsbereich (14) aufweist, und der Bereich zwischen dem Haltebereich (13) des zweiten Gewindeeinsatzes (12) und dem Betätigungsbereich (14) des zweiten Gewindeeinsatzes (12) in den Gewindegängen des Außengewindes (20) des Zylinders (10) angeordnet ist, und wobei im Anschlagelement (1) ein zweites Haltemittel (15) für den Haltebereich (13) des zweiten Gewindeeinsatzes (12) vorgesehen ist, und wobei der Betätigungsbereich (14) des zweiten Gewindeeinsatzes (12) bewegbar im Anschlagelement (1), vorzugsweise in einem im Anschlagelement (1) angeordneten zweiten Langloch (16), gelagert ist, und wobei durch eine Bewegung des Betätigungsbereichs (14) des zweiten Gewindeeinsatzes (12) der Durchmesser des zweiten Gewindeeinsatzes (12) veränderbar ist.

9. Federbein nach Anspruch 8, wobei der erste Gewindeeinsatz (2) und der zweite Gewindeeinsatz (12) ineinander übergehen, vorzugsweise indem der erste Haltebereich (3) und der zweite Haltebereich (13) ineinander übergehen oder der erste Haltebereich (3) und der zweite Haltebereich (13) übereinstimmen.

10. Federbein nach wenigsten einem der Ansprüche 8 oder 9, wobei der Haltebereich (13) des zweiten Gewindeeinsatzes (12) und/oder der Betätigungsbereich (14) des zweiten Gewindeeinsatzes (12) als radial nach außen weisender Zapfen, insbesondere als radial nach außen gebogenes Federende ausgebildet ist, wobei das zweite Haltemittel (15) vorzugsweise als Bohrung ausgebildet ist, in welcher der Haltebereich (13) des zweiten Gewindeeinsatzes (12) befestigbar ist.

11. Federbein nach wenigsten einem der Ansprüche 8 bis 10, wobei der zweite Gewindeeinsatz (12) federnd ausgebildet ist und derart im Anschlagelement (1) angeordnet ist, dass der Betätigungsbereich (14) des zweiten Gewindeeinsatzes (12) gegen ein erstes Ende (17) des zweiten Langlochs (16) drückt, oder dass der Betätigungsbereich (14) des zweiten Gewindeeinsatzes (12) bei Ausbleiben einer externen Kraftbeaufschlagung im Bereich des ersten Endes (17) des Langlochs (16) angeordnet ist.

12. Federbein nach Anspruch 11, wobei bei einer Bewegung des Betätigungsbereichs (14) des zweiten Gewindeeinsatzes (12) in Richtung des anderen Endes (18) des zweiten Langlochs (16) der Durchmesser des zweiten Gewindeeinsatzes (12) vergrößert wird.

13. Federbein nach dem vorhergehenden Anspruch, wobei die Richtung, in die der Betätigungsbereich (14) des zweiten Gewindeeinsatzes (12) zur Vergrößerung des Durchmessers des zweiten Gewindeeinsatzes (12) bewegbar ist, unterschiedlich ist zur Richtung, in die der Betätigungsbereich (14) des Gewindeeinsatzes (12) zur Vergrößerung des Durchmessers des Gewindeeinsatzes (12) bewegbar ist.

14. Federbein nach wenigsten einem der Ansprüche 8 bis 13, wobei das Langloch (6) und das zweite Langloch (16) axial von aneinander beabstandet sind, wobei das Haltemittel (5) und/oder das zweite Haltemittel (15) in axialer Richtung vorzugsweise zwischen dem Langloch (6) und dem zweiten Langloch (16) angeordnet ist oder sind.

15. Federbein nach wenigstens einem der Ansprüche 3 bis 14, wobei das Anschlagelement (1) im Inneren in jenem Bereich (31), in dem der Gewindeeinsatz (2) und/oder der zweite Gewindeeinsatz (12) anordenbar ist, frei von einem Innengewinde (21) ist, wobei das Anschlagelement (1) in axialer Richtung oberhalb und unterhalb des Bereichs (31) ohne Innengewinde (21) vorzugsweise mit einem zum Außengewinde (20) des Zylinders (10) korrespondierenden Innengewinde (21) versehen ist.

16. Federbein nach wenigstens einem der Ansprüche 3 bis 15, wobei ein auf einer Außenseite des Anschlagelements (1) anordenbares Entriegelungselement (9) vorgesehen ist, mit dem der Betätigungsbereich (4) des Gewindeeinsatzes (2) und/oder der Betätigungsbereich (14) des zweiten Gewindeeinsatzes (12) bewegbar ist oder sind, wobei das Entriegelungselement (9) auf seiner Innenseite vorzugsweise eine Nut (23), in die der Betätigungsbereich (4) des Gewindeeinsatzes (2) eingreift, und/oder vorzugsweise eine zweite Nut (24) aufweist, in die der Betätigungsbereich (14) des zweiten Gewindeeinsatzes (12) eingreift.

17. Fahrzeug mit einem Federbein nach einem der Ansprüche 3 bis 16.

## Claims

1. An abutment element (1) for mounting a coil spring (11) arranged at least partially around a cylinder (10) of a suspension strut, wherein the abutment element (1) is provided at least region-wise with a female thread (21), and wherein at least one thread insert (2) is arranged in the abutment element (1), the thread insert (2) preferably being of a resilient structure quite particularly in the form of a coil spring, the thread insert (2) having a holding region (3) and an actuating region (4), wherein the diameter of the thread insert (2) is variable by a movement of the actuating region (4), wherein a holding means (5), preferably in the form of a bore, for the holding region (3) is provided in the abutment element (1), **characterized in that** the actuating region (4) is mounted moveably in a slot (6) arranged in the abutment element (1).

2. The abutment element according to claim 1, wherein a second thread insert (12), preferably of a resilient structure and quite particularly in the form of a coil spring, is arranged in the abutment element (1), the thread insert (12) having a holding region (13) and an actuating region (14), and wherein a second holding means (15), preferably in the form of a bore, for the holding region (13) of the second thread insert (12) is provided in the abutment element (1), and wherein the actuating region (14) of the second thread insert (12) is mounted moveably in the abutment element (1), preferably in a second slot (16) arranged within the abutment element (1), and wherein the diameter of the second thread insert (12) is variable by a movement of the actuating region (4) of the second thread insert (12).

3. A suspension strut for a vehicle, in particular for a motorcycle, including
• a cylinder (10) having a piston (19) moveable in the cylinder (10),
• a coil spring (11) which is at least partially arranged around the cylinder (10),
• an abutment element (1) according to claim 1 or 2 for mounting the coil spring (11), wherein the position of the abutment element (1) is adjustably fixable along the longitudinal direction of the cylinder (10) at least with respect to one direction, and wherein the cylinder (10) is at least region-wise provided with a male thread (20) corresponding to the female thread (21), wherein preferably a, for example, metallic abutment ring (22) is arranged between the abutment element (1) and the coil spring (11),
wherein the region between the holding region (3) and the actuating region (4) can be arranged in the threads of the male thread (20) of the cylinder (10).

4. The suspension strut according to the preceding claim, wherein the thread insert (2) is of a resilient structure, in particular in the form of a coil spring.

5. The suspension strut according to at least one of claims 3 or 4, wherein the holding region (3) and/or the actuating region (4) is in the form of a radially outwardly pointing pin, in particular in the form of a radially outwardly bent spring end, wherein the holding means (5) is in the form of a bore to which the holding region (3) can be fixed.

6. The suspension strut according to at least one of claims 3 to 5, wherein the thread insert (2) is of a resilient structure and is arranged in the abutment element (1) in such a way that the actuating region (4) presses against a first end (7) of the slot (6) or the actuating region (4) is arranged in the region of the first end (7) of the slot (6) in the absence of an external applied force.

7. The suspension strut accoding to claim 6, wherein upon a movement of the actuating region (4) in the direction of the other end (8) of the slot (6) the diameter of the thread insert (2) is increased.

8. The suspension strut according to at least one of claims 3 to 7, wherein a second thread insert (12), preferably of a resilient structure and quite particularly in the form of a coil spring, can be arranged in the abutment element (1), wherein the second thread insert (12) has a holding region (13) and an actuating region (14), and the region between the holding region (13) of the second thread insert (12) and the actuating region (14) of the second thread insert (12) is arranged in the threads of the male thread (20) of the cylinder (10), and wherein a second holding means (15) for the holding region (13) of the second thread insert (12) is provided in the abutment element (1), and wherein the actuating region (14) of the second thread insert (12) is mounted moveably in the abutment element (1), preferably in a second slot (16) arranged in the abutment element (1), and wherein the diameter of the second thread insert (12) is variable by a movement of the actuating region (14) of the second thread insert (12).

9. The suspension strut according to claim 8, wherein the first thread insert (2) and the second thread insert (12) blend into each other, preferably by the first holding region (3) and the second holding region (13) blending into each other or by the first holding region (3) and the second holding region (13) being the same.

10. The suspension strut according to at least one of claims 8 or 9, wherein the holding region (13) of the second thread insert (12) and/or the actuating region (14) of the second thread insert (12) is in the form of a radially outwardly pointing pin, in particular in the form of a radially outwardly bent spring end, wherein the second holding means (15) is preferably in the form of a bore, in which the holding region (13) of the second thread insert (12) can be fixed.

11. The suspension strut according to at least one of claims 8 to 10, wherein the second thread insert (12) is of a resilient structure and is so arranged in the abutment element (1) that the actuating region (14) of the second thread insert (12) presses against a first end (17) of the second slot (16), or that the actuating region (14) of the second thread insert (12) is arranged in the region of the first end (17) of the slot (16) in the absence of an external applied force.

12. The suspension strut according to claim 11, wherein upon a movement of the actuating region (14) of the second thread insert (12) in the direction of the other end (18) of the second slot (16), the diameter of the second thread insert (12) is increased.

13. The suspension strut according to the preceding claim, wherein the direction in which the actuating region (14) of the second thread insert (12) is moveable to increase the diameter of the second thread insert (12) is different from the direction in which the actuating region (14) of the thread insert (12) is moveable for increasing the diameter of the thread insert (12).

14. The suspension strut according to at least one of claims 8 to 13, wherein the slot (6) and the second slot (16) are axially spaced from each other, wherein the holding means (5) and/or the second holding means (15) is or are arranged preferably between the slot (6) and the second slot (16) in the axial direction.

15. The suspension strut according to at least one of claims 3 to 14, wherein the abutment element (1) is free from a female thread (21) in the interior in that region (31) in which the thread insert (2) and/or the second thread insert (12) can be arranged, wherein the abutment element (1) is provided in an axial direction above and below the region (31) without a female thread (21) preferably with a female thread corresponding to the male thread (20) of the cylinder (10) .

16. The suspension strut according to at least one of claims 3 to 15, wherein there is provided an unlocking element (9) which can be arranged on an outside of the abutment element (1) and with which the actuating region (4) of the thread insert (2) and/or the actuating region (14) of the second thread insert (12) is or are moveable, wherein the unlocking element (9), wherein the unlocking element (9) on its inside preferably has a groove (23) into which the actuating region (4) of the thread insert (2) engages, and/or preferably has a second groove (24) into which the actuating region (14) of the second thread insert (12) engages.

17. A vehicle comprising a suspension strut according to one of claims 3 to 16.

## Revendications

1. Elément de butée pour le montage d'un ressort hélicoïdal (11) disposé au moins en partie autour d'un cylindre (10) d'une jambe de force, dans lequel l'élément de butée (1) est pourvu au moins par endroits d'un filetage femelle (21), et dans lequel au moins un insert fileté (2) disposé dans l'élément de butée (1), réalisé de préférence de manière élastique et idéalement en tant que ressort hélicoïdal, est prévu, lequel présente une zone de retenue (3) et une zone d'actionnement (4), dans lequel le diamètre de l'insert fileté (2) peut être modifié par un mouvement de la zone d'actionnement (4), dans lequel un moyen de retenue (5) pour la zone de retenue (3), de préférence réalisé en tant que trou, est prévu dans l'élément de butée (1), **caractérisé en ce que** la zone d'actionnement (4) est montée dans l'élément de butée (1) de manière à pouvoir se déplacer à l'intérieur d'un trou oblong (6) disposé dans l'élément de butée (1) .

2. Elément de butée selon la revendication 1, dans lequel un deuxième deuxième insert fileté (12), de préférence réalisé de manière élastique et idéalement en tant que ressort hélicoïdal, est disposé dans l'élément de butée (1), lequel présente une zone de retenue (13) et une zone d'actionnement (14), et dans lequel un deuxième moyen de retenue (15) pour la zone de retenue (13) du deuxième insert fileté (12), de préférence réalisé en tant que trou est prévu dans l'élément de butée (1), et dans lequel la zone d'actionnement (14) du deuxième insert fileté (12) est montée de préférence à l'intérieur d'un deuxième trou oblong (16) disposé dans l'élément de butée (1) de manière à pouvoir se déplacer dans l'élément de butée (1), et dans lequel le diamètre du deuxième insert fileté (12) peut être modifié par un mouvement de la zone d'actionnement (4) du deuxième insert fileté (12).

3. Jambe de force pour un véhicule, en particulier pour une motocyclette, comprenant
• un cylindre (10) avec un piston (19) mobile dans le cylindre (10),
• un ressort hélicoïdal (11) disposé au moins en partie autour du cylindre (10),
• un élément de butée (1) selon la revendication 1 ou 2 pour le montage du ressort hélicoïdal (11), dans laquelle la position de l'élément de butée (1) peut être fixée de manière réglable au moins par rapport à une direction le long de la direction longitudinale du cylindre (10), et dans laquelle le cylindre (10) est pourvu au moins par endroits d'un filetage mâle (20), lequel correspond au filetage femelle (21), dans laquelle de préférence une bague de butée (22) par exemple métallique est disposée entre l'élément de butée (1) et le ressort hélicoïdal (11),
dans laquelle la zone peut être disposée entre la zone de retenue (3) et la zone d'actionnement (4) dans les pas de filetage du filetage mâle (20) du cylindre (10).

4. Jambe de force selon la revendication précédente, dans laquelle l'insert fileté (2) est réalisé de manière élastique, en particulier en tant que ressort hélicoïdal.

5. Jambe de force selon au moins l'une des revendications 3 ou 4, dans laquelle la zone de retenue (3) et/ou la zone d'actionnement (4) est réalisée en tant que tourillon dirigé radialement vers l'extérieur, en particulier en tant qu'extrémité de ressort courbée radialement vers l'extérieur, dans laquelle le moyen de retenue (5) est réalisé de préférence en tant que trou dans lequel la zone de retenue (3) peut être fixée.

6. Jambe de force selon au moins l'une des revendications 3 à 5, dans laquelle l'insert fileté (2) est réalisé de manière élastique et est disposé dans l'élément de butée (1), de telle sorte que la zone d'actionnement (4) presse contre une première extrémité (7) du trou oblong (6), ou que la zone d'actionnement (4) est disposée dans la zone de la première extrémité (7) du trou oblong (6) en l'absence d'une soumission à une force externe.

7. Jambe de force selon la revendication 6, dans laquelle lors d'un mouvement de la zone d'actionnement (4) en direction de l'autre extrémité (8) du trou oblong (6) le diamètre de l'insert fileté (2) est augmenté.

8. Jambe de force selon au moins l'une des revendications 3 à 7, dans laquelle un deuxième deuxième insert fileté (12), de préférence réalisé de manière élastique et idéalement en tant que ressort hélicoïdal, peut être disposé dans l'élément de butée (1), dans laquelle le deuxième insert fileté (12) présente une zone de retenue (13) et une zone d'actionnement (14), et la zone entre la zone de retenue (13) du deuxième insert fileté (12) et la zone d'actionnement (14) du deuxième insert fileté (12) est disposée dans les pas de filetage du filetage mâle (20) du cylindre (10), et dans laquelle un deuxième moyen de retenue (15) pour la zone de retenue (13) du deuxième insert fileté (12) est prévu dans l'élément de butée (1), et dans laquelle la zone d'actionnement (14) du deuxième insert fileté (12) est montée de manière à pouvoir se déplacer dans l'élément de butée (1), de préférence dans un deuxième trou oblong (16) disposé dans l'élément de butée (1), et dans laquelle le diamètre du deuxième insert fileté (12) peut être modifié par un mouvement de la zone d'actionnement (14) du deuxième insert fileté (12).

9. Jambe de force selon la revendication 8, dans laquelle le premier insert fileté (2) et le deuxième insert fileté (12) se prolongent l'un dans l'autre, de préférence du fait que la première zone de retenue (3) et la deuxième zone de retenue (13) se prolongent l'une dans l'autre ou la première zone de retenue (3) et la deuxième zone de retenue (13) convergent.

10. Jambe de force selon au moins l'une des revendications 8 ou 9, dans laquelle la zone de retenue (13) du deuxième insert fileté (12) et/ou la zone d'actionnement (14) du deuxième insert fileté (12) est réalisée en tant que tourillon dirigé radialement vers l'extérieur, en particulier en tant qu'extrémité de ressort courbée radialement vers l'extérieur, dans laquelle le deuxième moyen de retenue (15) est réalisé de préférence en tant que trou dans lequel la zone de retenue (13) du deuxième insert fileté (12) peut être fixée.

11. Jambe de force selon au moins l'une des revendications 8 à 10, dans laquelle le deuxième insert fileté (12) est réalisé de manière élastique et est disposé dans l'élément de butée (1) de telle sorte que la zone d'actionnement (14) du deuxième insert fileté (12) presse contre une première extrémité (17) du deuxième trou oblong (16), ou que la zone d'actionnement (14) du deuxième insert fileté (12) en l'absence d'une soumission à une force externe est disposée dans la zone de la première extrémité (17) du trou oblong (16).

12. Jambe de force selon la revendication 11, dans laquelle lors d'un mouvement de la zone d'actionnement (14) du deuxième insert fileté (12) en direction de l'autre extrémité (18) du deuxième trou oblong (16) le diamètre du deuxième insert fileté (12) est augmenté.

13. Jambe de force selon la revendication précédente, dans laquelle la direction dans laquelle la zone d'actionnement (14) du deuxième insert fileté (12) est mobile pour l'augmentation du diamètre du deuxième insert fileté (12) est différente de la direction dans laquelle la zone d'actionnement (14) de l'insert fileté (12) est mobile pour l'augmentation du diamètre de l'insert fileté (12).

14. Jambe de force selon au moins l'une des revendications 8 à 13, dans laquelle le trou oblong (6) et le deuxième trou oblong (16) sont espacés axialement l'un de l'autre, dans laquelle le moyen de retenue (5) et/ou le deuxième moyen de retenue (15) est ou sont disposé(s) dans la direction axiale de préférence entre le trou oblong (6) et le deuxième trou oblong (16).

15. Jambe de force selon au moins l'une des revendications 3 à 14, dans laquelle l'élément de butée (1) peut être disposé à l'intérieur dans la zone (31) dans laquelle l'insert fileté (2) et/ou le deuxième insert fileté (12) est exempt d'un filetage femelle (21), dans laquelle l'élément de butée (1) est pourvu dans la direction axiale au-dessus et au-dessous de la zone (31) sans filetage femelle (21) de préférence d'un filetage femelle (21) correspondant au filetage mâle (20) du cylindre (10).

16. Jambe de force selon au moins l'une des revendications 3 à 15, dans laquelle un élément de déverrouillage (9) pouvant être disposé sur une face extérieure de l'élément de butée (1) est prévu, avec lequel la zone d'actionnement (4) de l'insert fileté (2) et/ou la zone d'actionnement (14) du deuxième insert fileté (12) est ou sont mobiles, dans laquelle l'élément de déverrouillage (9) présente sur sa face intérieure de préférence une rainure (23), dans laquelle la zone d'actionnement (4) de l'insert fileté (2) s'insère, et/ou de préférence une deuxième rainure (24), dans laquelle la zone d'actionnement (14) du deuxième insert fileté (12) s'insère.

17. Véhicule avec une jambe de force selon l'une quelconque des revendications 3 à 16.
